# EUROPÄISCHE PATENTSCHRIFT

(11) **EP 4 248 755 B1**
(45) Veröffentlichungstag und Bekanntmachung des Hinweises auf die Patenterteilung: **04.09.2024**
(21) Anmeldenummer: 22164477.6
(22) Anmeldetag: 25.03.2022
(51) Int. Cl.: A21C 11/00

(54) **ROTATIONSVORRICHTUNG UND VERFAHREN ZUR ROTATION EINER FLACHEN TEIGSCHEIBE**
ROTARY DEVICE AND METHOD FOR ROTATING A FLAT DOUGH DISC
DISPOSITIF DE ROTATION ET PROCÉDÉ DE ROTATION D'UN DISQUE PLAT DE PÂTE

(43) Veröffentlichungstag der Anmeldung: 27.09.2023
(73) Patentinhaber: Prim As Tiefkühlprodukte Gesellschaft m.b.H., 6406 Oberhofen im Inntal (AT)
(72) Erfinder: Laimer, Martin, 6406 Oberhofen im Inntal (AT)
(74) Vertreter: Karzel, Philipp

(56) Entgegenhaltungen:
- WO-A1-2015/115220
- US-A- 4 226 579
- US-A1- 2021 235 707

## Beschreibung

Die Erfindung betrifft eine Rotationsvorrichtung zur Rotation einer flachen Teigscheibe nach dem Oberbegriff des Anspruchs 1 und ein industrielles Fertigungsverfahren zur Rotation einer flachen Teigscheibe mit zwei abgeflachten Seiten.

Industriell gefertigtes flaches Backwerk wird durch Backen von flachen Teigscheiben hergestellt. Zur Herstellung der flachen Teigscheibe wird zunächst ein in etwa kugelförmiger Teigklumpen geformt, der anschließend durch einen Stempel oder durch Auswalzen in mindestens zwei Richtungen zu der flachen Teigscheibe geformt wird. Auf diese Weise hergestellte flache Teigscheiben weisen an ihrem Außenumfang in der Regel keine ansprechend abgerundete Form auf. Die Dicke einer solchen flachen Teigscheibe ist im Gegensatz zu einer handgefertigten flachen Teigscheibe sehr homogen. Dies ist optisch wenig ansprechend und führt auch zu einem Geschmackserlebnis, das den Anforderungen an ein Premiumprodukt nicht genügt. Mit Auswalzen und Stempeln kann die flache Teigscheibe nur bis zu einer bestimmten Mindestdicke abgeflacht werden. Auch dies hat Auswirkungen auf den Geschmack des späteren fertigen flachen Backwerks.

Aus der EP 2 962 570 A2 ist eine Vorrichtung bekannt, bei der die flache Teigscheibe rotiert wird und unter Ausnutzung der Zentrifugalkraft geformt wird. Während des Rotiervorgangs wird die flache Teigscheibe beidseitig gepresst. Dies erfordert eine aufwändige Konstruktion der Rotiervorrichtung und führt zu einer unnatürlichen Teigkonsistenz, die von derjenigen einer handgefertigten Teigscheibe abweicht. Der Einsatz der Rotiervorrichtung in einer industriellen Fertigungsanlage mit einem Förderband ist nur in aufwändiger Weise möglich.

Das Dokument US 2021/235707 A1 offenbart eine Teigdehnmaschine, mit einer Auflagefläche für den Teig, die zur Annäherung an eine darüber angeordnete Teigdehneinheit auf und ab bewegt werden kann. Eingriffelementeder Teigdehneinheit können mittels eines Motors radial nach außen bewegt werden und so zur Bearbeitung bzw. Dehnung des Teiges ohne Rotationsbewegung beitragen.

Auch das Dokument WO 2015/115220 A1 betrifft eine Teigformmaschine, bei der der Teig durch Eingriffelemente radial nach außen geschoben wird.

Das Dokument US 4,226,579 A betrifft eine Vorrichtung zum Herstellen einer Kruste. Das Krustenmaterial wird mittels eines Rotationskopfs in einen topfförmigen Behälter gepresst und darin rotiert.

Der Erfindung liegt die Aufgabe zugrunde, eine einfache Vorrichtung zu schaffen, die die Bearbeitung von flachen Teigscheiben zu einer dünnen, flachen und abgerundeten Teigscheibe, die einer in Handarbeit hergestellten Teigscheibe ähnelt, ermöglicht.

Diese Aufgabe wird durch eine Rotationsvorrichtung mit den Merkmalen des Anspruchs 1 gelöst.

Eine weitere Aufgabe der Erfindung liegt darin, ein industrielles Fertigungsverfahren anzugeben, mit dem eine flache, dünne und gleichmäßig gerundete Teigscheibe, die einer in Handarbeit hergestellten Teigscheibe ähnelt, hergestellt werden kann. Diese Aufgabe wird durch ein Verfahren mit den Merkmalen des Anspruchs 15 gelöst.

Der Erfindung liegt die Erkenntnis zugrunde, dass eine handwerklich hergestellte flache Teigscheibe im herkömmlichen Herstellungsprozess um eine Rotationsachse rotiert und hierbei lediglich auf einer der beiden Seiten der flachen Teigscheibe abgestützt wird. Durch diese Art der Rotation kann für die flache Teigscheibe eine geringere Mindestdicke erreicht werden als dies nur durch Stempeln, Auswalzen oder bei beidseitiger Abstützung möglich ist. Darüber hinaus ist die Dickenverteilung inhomogen, so dass die flache Teigscheibe ein natürliches Dickenprofil aufweist. Typischerweise ist die Dicke der flachen Teigscheibe in der Nähe der Rotationsachse geringer als weiter entfernt von der Rotationsachse. Die Rotation sorgt für eine natürliche Abrundung der flachen Teigscheibe an ihrem Umfangsrand. Die flache Teigscheibe ist durch die Rotation bezüglich der Rotationsachse im Wesentlichen kreisförmig. Basierend auf dieser Erkenntnis wird durch die Erfindung eine Rotationsvorrichtung zur Verfügung gestellt, bei der eine flache Teigscheibe während des Rotiervorgangs lediglich auf einer der beiden flachen Seiten der Teigscheibe von der Vorrichtung zur Rotation angetrieben wird.

Die Implementierung eines Rotierens der flachen Teigscheibe in einem industriellen Fertigungsprozess stellt eine Herausforderung dar. Der Erfindung liegt die Erkenntnis zugrunde, dass die rotierende flache Teigscheibe einerseits zentral gehalten werden muss und andererseits die Ausdehnung der flachen Teigscheibe aufgrund der durch die Rotation auf sie wirkende Zentrifugalkraft nicht behindert werden darf. Erfindungsgemäß ist zur Übertragung eines Drehmoments auf die flache Teigscheibe ein erster Mitnehmer mit Eingreifelementen vorgesehen, die in die flache Teigscheibe eingreifen. Die Eingreifelemente sind so gestaltet, dass sie während des Eingriffs in die flache Teigscheibe eine Ausdehnung der flachen Teigscheibe zulassen, die durch die während der Rotation auf sie wirkenden Zentrifugalkraft bewirkt wird. Dadurch kann sich die Teigscheibe während der Rotation auf natürliche Weise ausdehnen. Die Dickenverteilung der Teigscheibe stellt sich auf natürliche Weise ein. Die Dickenverteilung der Teigscheibe ähnelt nach dem Rotationsvorgang in der Rotationsvorrichtung derjenigen einer handwerklich hergestellten flachen Teigscheibe. Aufgrund der natürlich bewirkten Dickenverteilung ergibt sich eine Teigscheibe mit einem lockeren Teig. Dadurch ist das Geschmackserlebnis beim Genuss eines fertigen Backwerks, das aus einer mit der erfindungsgemäßen Rotationsvorrichtung bearbeiteten Teigscheibe gebacken wurde, im Vergleich zu einer Teigscheibe, die während des Rotationsvorgangs noch gepresst wurde und bei der die durch die Zentrifugalkraft bewirkte Ausdehnung behindert wurde, besser.

Die erfindungsgemäße Rotationsvorrichtung überträgt das Drehmoment lediglich auf einer der beiden flachen Seiten der flachen Teigscheibe auf die flache Teigscheibe. Dadurch ist die Konstruktion der Rotationsvorrichtung deutlich einfacher. Die Auflagefläche ist unrotiert. Die Auflagefläche dient lediglich zur Auflage der Teigscheibe. Dies ermöglicht die einfache Implementierung der Rotationsvorrichtung in eine industrielle Fertigungsvorrichtung mit einem Transportband. Es kann dann vorgesehen sein, dass die Auflagefläche durch das Transportband gebildet ist. Dies wird auch dadurch ermöglicht, dass der erste Mitnehmer oberhalb der Auflagefläche angeordnet ist. Insbesondere ist kein drehmomentübertragendes Element der Rotationsvorrichtung unterhalb des ersten Mitnehmers angeordnet. Zweckmäßig verläuft die Rotationsachse in Einsatzlage der Rotationsvorrichtung vertikal. Insbesondere in dieser Einsatzlage ist der erste Mitnehmer oberhalb der Auflagefläche angeordnet.

Erfindungsgemäß ist vorgesehen, dass der erste Mitnehmer mittels des Antriebsmotors rotierend um die Rotationsachse antreibbar ist. Der erste Mitnehmer ist dazu ausgelegt, ein Drehmoment auf die flache Teigscheibe zu übertragen. Zu Beginn des Rotationsvorgangs liegt die flache Teigscheibe auf der unrotierten, flachen Auflagefläche auf. Die Rotationsvorrichtung ist insbesondere so ausgelegt, dass der erste Mitnehmer zunächst an die flache Teigscheibe angenähert wird und in die flache Teigscheibe eingreift. Anschließend wird der erste Mitnehmer zweckmäßig mittels des Antriebsmotors rotierend um die Rotationsachse angetrieben. Die Rotationsfrequenz wird insbesondere ausgehend von einem unrotierten Zustand des ersten Mitnehmers langsam erhöht. Die Rotationsfrequenz der flachen Teigscheibe wird auch als Drehzahl bezeichnet. Hierbei werden die zwischen der Auflagefläche und der flachen Teigscheibe wirkenden Haftreibungskräfte überwunden. Die flache Teigscheibe gleitet rotierend über die Auflagefläche. Die Auflagefläche ist insbesondere eben und flach.

Insbesondere ist die Auflagefläche der Rotationsvorrichtung unbeteiligt an der Drehmomentübertragung von der Rotationsvorrichtung auf die flache Teigscheibe.

Die Eingreifelemente sind vorteilhaft so gestaltet, dass sie bei der Rotation der flachen Teigscheibe ein Abheben der flachen Teigscheibe von der Auflagefläche zumindest in der Art bewirken, dass die Haftreibungskraft zwischen der flachen Teigscheibe und der Auflagefläche überwunden ist. Dadurch ist ein verdrillungsfreies Rotieren der flachen Teigscheibe möglich.

Die Eingreifelemente sind zweckmäßig so gestaltet, dass sie bei der Rotation der flachen Teigscheibe ein Abheben der flachen Teigscheibe von der Auflagefläche zumindest in der Art bewirken, dass zwischen der flachen Teigscheibe und der Auflagefläche lediglich Gleitreibungskräfte wirken. Dadurch kann die flache Teigscheibe sich unter der Wirkung der Zentrifugalkraft ausdehnen.

Die Eingreifelemente sind so gestaltet, dass sie bezüglich der Richtung der Rotationsachse mit einem Hinterschnitt in die flache Teigscheibe eingreifen. Insbesondere bewirkt der Hinterschnitt eine Kraft vom ersten Mitnehmer auf die flache Teigscheibe, die auch eine Kraftkomponente in Richtung der Rotationsachse und in Richtung weg von der Auflagefläche aufweist. Dadurch ist ein rotierendes Gleiten der flachen Teigscheibe auf der Auflagefläche begünstigt.

Der erste Mitnehmer ist von dem Antriebsmotor so angetrieben, dass die Eingreifelemente in einer Drehrichtung um die Rotationsachse umlaufen. Die Drehrichtung läuft um die Rotationsachse um. Die Eingreifelemente zeigen in die Drehrichtung. Der erste Mitnehmer weist einen Grundkörper auf. Die Eingreifelemente stehen gegenüber dem Grundkörper in Richtung auf die Auflagefläche vor.

Vorteilhaft sind bezüglich der Drehrichtung zwischen den Eingreifelementen Kanäle ausgebildet. Zwischen in Drehrichtung benachbarten Eingreifelementen ist jeweils ein Kanal vorgesehen. Zweckmäßig erstrecken sich die Kanäle von einem auf Seiten der Rotationsachse liegenden Zentrum des ersten Mitnehmers hin zu einer radial außenliegenden Außenseite des ersten Mitnehmers. Dadurch kann sich die flache Teigscheibe während der Rotation unter Einwirkung der Zentrifugalkraft entlang der Kanäle in Radialrichtung ausdehnen. Dadurch ergibt sich eine Dickenverteilung der flachen Teigscheibe, die einer handwerklich bearbeiteten Teigscheibe ähnelt. Die Teigscheibe ist nach der Rotation mit der Rotationsvorrichtung in ihrem Zentrum dünner als in den radial außenliegenden Bereichen.

Zweckmäßig erstrecken sich die Kanäle in Radialrichtung radial zur Rotationsachse. Dadurch ist eine besonders einfache und effiziente Gestaltung der Kanäle möglich.

Die Eingreifelemente weisen eine in Drehrichtung vorne liegende Eingreiffläche auf. Mittels der Eingreiffläche ist Drehmoment vom ersten Mitnehmer auf die flache Teigscheibe übertragbar. Die Eingreiffläche kann insbesondere eine Stufe sein. Eine Normale auf die Eingreiffläche weist vorteilhaft eine Vektorkomponente auf, die in Drehrichtung zeigt. Dadurch kann der erste Mitnehmer auf einfache Weise eine Übertragung von Drehmoment auf die flache Teigscheibe bewirken.

Die Eingreiffläche verläuft bezüglich der Richtung der Rotationsachse ausgehend von dem Grundkörper des ersten Mitnehmers hin zu der Auflagefläche nach vorne in Drehrichtung geneigt. Dadurch bewirkt die Eingreiffläche bei Rotation des ersten Mitnehmers ein Abheben der flachen Teigscheibe von der Auflagefläche in der Art, dass die flache Teigscheibe rotierend über die Auflagefläche gleitet.

Zweckmäßig ist bezüglich der Richtung der Rotationsachse zwischen dem Grundkörper und den Eingreifelementen je ein Hohlraum ausgebildet ist. Vorteilhaft ist der Hohlraum in Drehrichtung nach vorne offen. Dadurch kann der erste Mitnehmer auf einfache Weise so gestaltet werden, dass er bei Rotation eine Kraft auf die flache Teigscheibe bewirkt, die in Richtung weg von der Auflagefläche hin zu dem ersten Mitnehmer zeigt. Dadurch ist ein Abheben der flachen Teigscheibe möglich.

Vorteilhaft ist der Hohlraum in Radialrichtung radial von der Rotationsachse weg durch den ersten Mitnehmer unbegrenzt. Dadurch kann sich die flache Teigscheibe während der Rotation in Radialrichtung ungehindert durch den ersten Mitnehmer ausdehnen.

Insbesondere sind mindestens zwei, insbesondere mindestens drei, insbesondere mindestens vier, insbesondere mindestens fünf Eingreifelemente vorgesehen. Dadurch ist eine gute Drehmomentübertragung von dem ersten Mitnehmer auf die flache Teigscheibe möglich.

In vorteilhafter Weiterbildung der Erfindung ist die Rotationsvorrichtung Bestandteil einer Fertigungsvorrichtung zur industriellen Fertigung eines flachen Backwerks. Die Fertigungsvorrichtung umfasst außer der Rotationsvorrichtung ein Transportband. Zweckmäßig ist die Auflagefläche der Rotationsvorrichtung durch das Transportband gebildet. Da die Auflagefläche für die Rotationsvorrichtung unbeteiligt an der Drehmomentübertragung von der Rotationsvorrichtung auf die flache Teigscheibe ist, kann sie problemlos durch das Transportband gebildet sein. Das Transportband rotiert nicht um die Rotationsachse der Rotationsvorrichtung. Die Rotationsvorrichtung kann auf einfache Weise in die Fertigungsvorrichtung integriert sein.

Das erfindungsgemäße industrielle Fertigungsverfahren zur Rotation einer flachen Teigscheibe mit zwei abgeflachten Seiten auf einer unrotierten Auflagefläche umfasst folgende Schritte:
- zur Rotation der Teigscheibe um eine Rotationsachse, die quer, insbesondere senkrecht zu den
   abgeflachten Seiten der Teigscheibe verläuft, wird mittels eines ersten Mitnehmers von oben in die Teigscheibe eingegriffen,
- anschließend wird die Rotationsfrequenz der Teigscheibe ausgehend vom unrotierten Zustand so erhöht, dass die Haftreibung zwischen der Teigscheibe und der Auflagefläche überwunden wird ohne dass es zu einer Verdrillung der Teigscheibe kommt.

Dies ermöglicht eine Rotation der flachen Teigscheibe auch ohne eine mitrotierende Auflagefläche. Insbesondere erfolgt die Rotation mit einem Mitnehmer, der eine Ausdehnung der flachen Teigscheibe in Radialrichtung, in Richtung weg von der Rotationsachse zulässt.

Zweckmäßig erfolgt die Rotation der flachen Teigscheibe mit einer Rotationsvorrichtung, die eine oder mehrere der vorstehend beschriebenen Eigenschaften aufweist.

Die Rotationsvorrichtung kann in Form eines eigenständigen erfinderischen Gedankens auch wie nachstehend beschrieben gestaltet sein:
Rotationsvorrichtung zur Rotation einer flachen Teigscheibe, umfassend
   - einen Antriebsmotor und
   - einen ersten Mitnehmer, der mittels des Antriebsmotors rotierend um eine Rotationsachse antreibbar ist, wobei der erste Mitnehmer dazu ausgelegt ist, ein Drehmoment auf die flache Teigscheibe zu übertragen,
dadurch gekennzeichnet, dass die Rotationsvorrichtung einen zweiten Mitnehmer aufweist, dass der zweite Mitnehmer bezüglich der Rotationsachse radial weiter außenliegend als der erste Mitnehmer angeordnet ist, dass der zweite Mitnehmer mit derselben Rotationsfrequenz wie der erste Mitnehmer um die Rotationsachse rotierend antreibbar ist, dass der zweite Mitnehmer einen Mitnahmezustand und einen Freilaufzustand aufweist, und dass die Rotationsvorrichtung derart ausgelegt ist,
   - dass im Mitnahmezustand des zweiten Mitnehmers Drehmoment vom zweiten Mitnehmer auf die flache Teigscheibe übertragbar ist,
   - und dass im Freilaufzustand des zweiten Mitnehmers der zweite Mitnehmer an einer Übertragung von Drehmoment auf die flache Teigscheibe unbeteiligt ist.

All diese Merkmale sind hinsichtlich des ersten erfinderischen Gedankens, der hauptsächlich die Gestaltung des ersten Mitnehmers betrifft, optional. Der erste erfinderische Gedanke und der zweite erfinderische Gedanke können miteinander kombiniert werden, so dass sich eine einzige Erfindung daraus ergibt.

Typischerweise liegt die zu rotierende flache Teigscheibe auf einer flachen Auflagefläche, wie beispielsweise einem Transportband auf. Zwischen der Auflagefläche und der flachen Teigscheibe wirken Haftreibungskräfte. Zur Überwindung dieser Haftreibungskräfte muss zu Beginn des Rotationsvorgangs ein großes Drehmoment auf die flache Teigscheibe übertragen werden. Die alternative Rotationsvorrichtung weist hierzu den ersten Mitnehmer und den zweiten Mitnehmer auf. Der zweite Mitnehmer ist bezüglich der Rotationsachse radial weiter außen liegend als der erste Mitnehmer angeordnet. Der erste Mitnehmer ist dazu ausgelegt, ein Drehmoment auf die flache Teigscheibe zu übertragen. Der erste Mitnehmer kann, wie obenstehend zum ersten erfinderischen Gedanken beschrieben, gestaltet sein. Er kann aber auch völlig anders gestaltet sein. Der zweite Mitnehmer ist mit derselben Rotationsfrequenz wie der erste Mitnehmer um die Rotationsachse rotierend antreibbar.

Der zweite Mitnehmer weist einen Mitnahmezustand und einen Freilaufzustand auf. Die Rotationsvorrichtung ist derart ausgelegt, dass im Mitnahmezustand des zweiten Mitnehmers Drehmoment vom zweiten Mitnehmer auf die flache Teigscheibe übertragbar ist. Dadurch können im Mitnahmezustand sowohl der erste Mitnehmer als auch der zweite Mitnehmer an der Übertragung von Drehmoment auf die flache Teigscheibe beteiligt sein. Dadurch ist die Übertragung eines großen Drehmoments auf die flache Teigscheibe möglich. Dadurch kann zu Beginn eines Rotationsvorgangs die Haftreibungskraft zwischen der Auflagefläche und der flachen Teigscheibe überwunden und die flache Teigscheibe zum Rotieren gebracht werden.

Die alternative Rotationsvorrichtung ist derart ausgelegt, dass im Freilaufzustand des zweiten Mitnehmers der zweite Mitnehmer an einer Übertragung vom Drehmoment auf die flache Teigscheibe unbeteiligt ist. Mit anderen Worten ist die Rotationsvorrichtung derart ausgelegt, dass im Freilaufzustand des zweiten Mitnehmers kein Drehmoment von dem zweiten Mitnehmer auf die flache Teigscheibe übertragbar ist. Nach der anfänglichen Überwindung der Haftreibungskraft ist zur Aufrechterhaltung der Rotationsbewegung der flachen Teigscheibe ein geringeres Drehmoment als zu Beginn erforderlich. Dadurch, dass der zweite Mitnehmer im Freilaufzustand an einer Übertragung vom Drehmoment auf die flache Teigscheibe unbeteiligt ist, kann sich der Teig der Teigscheibe während der Rotationsbewegung der Teigscheibe aufgrund der wirkenden Fliehkräfte gleichmäßig verteilen. Der zweite Mitnehmer hindert den Teig nicht an einer gleichmäßigen Verteilung. Dadurch wird eine Anhäufung von Teig an der radial innen liegenden Seite des zweiten Mitnehmers verhindert.

Vorteilhaft ist vorgesehen, dass der zweite Mitnehmer ein Eingreifteil zum Eingriff in die Teigscheibe ist. Insbesondere ist die Rotationsvorrichtung derart ausgelegt, dass der zweite Mitnehmer im Mitnahmezustand in die Teigscheibe eingreift und dass die Teigscheibe im Freilaufzustand frei von einem Eingriff des zweiten Mitnehmers ist. Mit anderen Worten ist die Rotationsvorrichtung derart ausgelegt, dass der zweite Mitnehmer im Freilaufzustand nicht in die Teigscheibe eingreift. Durch den Eingriff des zweiten Mitnehmers in die Teigscheibe ist eine Übertragung des Drehmoments vom zweiten Mitnehmer auf die Teigscheibe auf einfache Weise möglich.

In vorteilhafter Weiterbildung der Erfindung ist vorgesehen, dass die Rotationsvorrichtung eine Steuereinheit aufweist und dass die Steuereinheit den zweiten Mitnehmer so steuert, dass der zweite Mitnehmer in Abhängigkeit der Rotationsfrequenz des ersten Mitnehmers im Mitnahmezustand oder im Freilaufzustand betrieben wird. Insbesondere steuert die Steuereinheit den zweiten Mitnehmer so, dass der zweite Mitnehmer beim Überschreiten einer Grenzrotationsfrequenz des ersten Mitnehmers in Richtung von einer niedrigen zu einer höheren Rotationsfrequenz vom Mitnahmezustand in den Freilaufzustand überführt wird. Dadurch kann die Anhäufung von Teigmasse am zweiten Mitnehmer bei Rotationen mit Rotationsfrequenzen oberhalb der Grenzrotationsfrequenz sicher vermieden werden.

Zweckmäßig steuert die Steuereinheit den zweiten Mitnehmer so, dass der zweite Mitnehmer beim Überschreiten der Grenzrotationsfrequenz des ersten Mitnehmers in Richtung von einer hohen zu einer niedrigen Rotationsfrequenz vom Freilaufzustand in den Mitnahmezustand überführt wird. Dadurch sind eine Beendigung des Rotationsvorgangs und ein Abbremsen der flachen Teigscheibe in kontrollierter Weise möglich. Der zweite Mitnehmer verhindert, dass die bezüglich der Rotationsachse äußeren Bereiche der flachen Teigscheibe aufgrund ihrer Massenträgheit bei einer Frequenzverringerung mit größerer Frequenz als der aktuellen Rotationsfrequenz des ersten Mitnehmers umlaufen. Dadurch können Risse und Verwerfungen im Teig der flachen Teigscheibe vermieden werden. Unterschiede in den Rotationsfrequenzen des äußeren Bereichs und des inneren Bereichs der Teigscheibe können vermieden werden.

Insbesondere sind die Steuereinheit und die Rotationsvorrichtung so ausgelegt, dass der erste Mitnehmer und der zweite Mitnehmer zu einem ersten Zeitpunkt mit einer ersten Rotationsfrequenz rotieren. Der erste Zeitpunkt ist der Beginn der Übertragung des Drehmoments auf die Teigscheibe. Die Steuereinheit und die Rotationsvorrichtung sind insbesondere so ausgelegt, dass zu dem ersten Zeitpunkt sowohl der erste Mitnehmer als auch der zweite Mitnehmer zur Übertragung des Drehmoments beitragen. Vorteilhaft sind die Steuereinheit und die Rotationsvorrichtung so ausgelegt, dass zu einem zweiten Zeitpunkt, der nach dem ersten Zeitpunkt liegt, zumindest der erste Mitnehmer mit einer zweiten Rotationsfrequenz rotiert, die größer als die erste Rotationsfrequenz ist und dass zu dem zweiten Zeitpunkt der zweite Mitnehmer an der Übertragung des Drehmoments unbeteiligt ist. Mit anderen Worten sind die Steuereinheit und die Rotationsvorrichtung so ausgelegt, dass der zweite Mitnehmer zu dem zweiten Zeitpunkt kein Drehmoment auf die flache Teigscheibe überträgt.

Zweckmäßig erstreckt sich der zweite Mitnehmer in Radialrichtung. Die Radialrichtung verläuft in Richtung radial zur Rotationsachse. Dadurch kann der zweite Mitnehmer bei seinem Umlauf um die Rotationsachse effizient Drehmoment auf die flache Teigscheibe übertragen.

In vorteilhafter Weiterbildung der alternativen Rotationsvorrichtung umfasst die Rotationsvorrichtung mindestens zwei zweite Mitnehmer. Die mindestens zwei zweiten Mitnehmer sind in Umfangsrichtung bezüglich der Rotationsachse in einem Winkelabstand zueinander angeordnet. Die mindestens zwei zweiten Mitnehmer sind in Drehrichtung in einem Winkelabstand zueinander angeordnet Dadurch ist eine gleichmäßige Übertragung des Drehmoments von den zweiten Mitnehmern auf die flache Teigscheibe möglich. Insbesondere können lokale Haftreibungskräfte dadurch effizient überwunden werden.

In vorteilhafter Weiterbildung der alternativen Rotationsvorrichtung umfasst die Rotationsvorrichtung ein Begrenzungselement zur Begrenzung einer Bewegung der Teigscheibe in Radialrichtung bezüglich der Rotationsachse. Das Begrenzungselement ist bezüglich der Rotationsachse radial weiter außenliegend als der zweite Mitnehmer angeordnet. Durch das Begrenzungselement ist die Ausdehnung der Teigscheibe in Radialrichtung begrenzt. Aufgrund der Fliehkraft dehnt sich die Teigscheibe während der Rotation in der Rotationsvorrichtung in Radialrichtung aus. Das Begrenzungselement begrenzt diese Ausdehnung. Dadurch kann für die Teigscheibe eine bestimmte Form erreicht werden. Insbesondere läuft das Begrenzungselement vollständig um die Rotationsachse um. Vorteilhaft läuft das Begrenzungselement kreisförmig um die Rotationsachse um. Dadurch kann in der Rotationsvorrichtung eine kreisförmige Teigscheibe hergestellt werden.

Zweckmäßig weist das Begrenzungselement eine bezüglich der Richtung der Rotationsachse weg vom Antriebsmotor zur Rotationsachse hin geneigte Begrenzungsfläche auf. Dadurch wird der sich aufgrund der Fliehkraft ausdehnende Teig mittels der geneigten Begrenzungsfläche in Richtung auf den Antriebsmotor umgelenkt. Dadurch ist verhindert, dass Teigmasse in Richtung weg vom Antriebsmotor und in Radialrichtung das Begrenzungselement passiert.

In vorteilhafter Weiterbildung der alternativen Rotationsvorrichtung ist die Rotationsvorrichtung Teil einer Fertigungsvorrichtung zur industriellen Fertigung eines flachen Backwerks. Die Fertigungsvorrichtung umfasst ein Transportband. Zweckmäßig ist das Transportband zur Förderung von Teigscheiben in eine Förderrichtung entlang einer Förderstrecke ausgelegt. Vorteilhaft ist der erste Mitnehmer der Rotationsvorrichtung zur Aufnahme und zur Abgabe einer Teigscheibe in Richtung der Rotationsachse auf das Transportband zu und von dem Transportband weg bewegbar gelagert. Dadurch kann eine Teigscheibe auf einfache Weise zur Rotation aufgenommen werden und ebenso auf einfache Weise wieder abgegeben werden. Zur Aufnahme einer auf dem Transportband beförderten Teigscheibe wird der erste Mitnehmer in Richtung auf das Transportband zu bewegt. Zur Abgabe der Teigscheibe wird der erste Mitnehmer in Richtung von dem Transportband weg bewegt.

All die Merkmale des zweiten erfinderischen Gedankens, die hauptsächlich den zweiten Mitnehmer betreffen können mit den Merkmalen des ersten erfinderischen Gedankens, die hauptsächlich den ersten Mitnehmer betreffen, kombiniert werden. So kann auch die Rotationsvorrichtung gemäß des ersten erfinderischen Gedankens zusätzlich einen zweiten Mitnehmer mit einzelnen oder allen beschriebenen Merkmalen aufweisen.

Nach einem Verfahren, basierend auf einem weiteren, eigenen erfinderischen Gedanken, sind zur Rotation einer flachen Teigscheibe mit zwei abgeflachten Seiten folgende Schritte vorgesehen: Zunächst wird zur Rotation der Teigscheibe um eine Rotationsachse, die quer, insbesondere senkrecht zu den abgeflachten Seiten der Teigscheibe verläuft, sowohl mit einem ersten Mitnehmer als auch mit einem zweiten Mitnehmer Drehmoment auf die Teigscheibe übertragen, wobei der zweite Mitnehmer weiter entfernt von der Rotationsachse ist als der erste Mitnehmer. Anschließend wird das Drehmoment so auf die Teigscheibe übertragen, dass der zweite Mitnehmer an der Übertragung des Drehmoments unbeteiligt ist. Mit anderen Worten wird das Drehmoment anschließend so auf die Teigscheibe übertragen, dass der zweite Mitnehmer kein Drehmoment auf die Teigscheibe überträgt. Insbesondere verläuft die Rotationsachse senkrecht zu den abgeflachten Seiten der Teigscheibe. Speziell handelt es sich bei dem Verfahren zur Rotation einer flachen Teigscheibe mit zwei abgeflachten Seiten um ein Verfahren zur industriellen Fertigung eines flachen Backwerks. Insbesondere wird das Verfahren auf eine flache Teigscheibe angewendet, die auf einem Transportband angeordnet ist. Die flache Teigscheibe liegt auf dem Transportband flach auf.

Vorteilhaft wird bei Beendigung der Rotation der Teigscheibe um die Rotationsachse das Drehmoment der Teigscheibe sowohl mit dem ersten Mitnehmer als auch mit dem zweiten Mitnehmer verringert.

Das oben beschrieben, erfindungsgemäße Verfahren ist unabhängig von dem weiteren Verfahren, kann aber auch mit dem weiteren Verfahren kombiniert werden.

Ausführungsbeispiele der Erfindung werden im Folgenden anhand der Zeichnung erläutert. Es zeigen:
- Fig. 1: eine Seitenansicht auf eine Fertigungsvorrichtung mit einer Rotationsvorrichtung gemäß eines ersten erfinderischen Gedankens in Richtung quer zur Förderrichtung,
- Fig. 2: eine Seitenansicht auf die Fertigungsvorrichtung aus Fig. 1 in Förderrichtung,
- Fig. 3: eine Draufsicht auf die Fertigungsvorrichtung aus Fig. 1,
- Fig. 4: eine Schnittdarstellung eines Schnitts entlang der Schnittlinie IV-IV aus Fig. 3,
- Fig. 5: eine perspektivische Darstellung mehrerer Rotationsvorrichtungen der Fertigungsvorrichtung aus Fig. 1,
- Fig. 6: eine Seitenansicht einer Rotationsvorrichtung der Fertigungsvorrichtung aus Fig. 1,
- Fig. 7: eine Ansicht von unten auf die Rotationsvorrichtung aus Fig. 7,
- Fig. 8: eine Schnittdarstellung eines Schnitts entlang der Schnittlinie VIII-VIII aus Fig. 6,
- Fig. 9: eine perspektivische Darstellung eines ersten Mitnehmers der Rotationsvorrichtung aus Fig. 6,
- Fig. 10: eine Seitenansicht auf den ersten Mitnehmer aus Fig. 9,
- Fig. 11: eine Ansicht von unten auf den ersten Mitnehmer aus Fig. 9,
- Fig. 12: eine Schnittdarstellung eines Schnitts entlang der Schnittlinie XII-XII aus Fig. 11,
- Fig. 13: eine Seitenansicht auf eine Fertigungsvorrichtung mit einer Rotationsvorrichtung gemäß eines zweiten erfinderischen Gedankens in Richtung entgegen der Förderrichtung,
- Fig. 14: eine Draufsicht auf die Fertigungsvorrichtung aus Fig. 13,
- Fig. 15: eine Schnittdarstellung eines Schnitts entlang der Schnittebene III-III in Fig. 13,
- Fig. 16: eine vergrößerte Darstellung des Details IV in Fig. 13,
- Fig. 17: eine vergrößerte Darstellung des Details V in Fig. 15,
- Fig. 18: eine schematische Draufsicht auf die Fertigungsvorrichtung aus Fig. 13,
- Fig. 19: eine Seitenansicht auf die Rotationsvorrichtung aus Fig. 13,
- Fig. 20: eine Draufsicht von oben auf die Rotationsvorrichtung aus Fig. 19,
- Fig. 21: eine Seitenansicht der Rotationsvorrichtung aus Fig. 19,
- Fig. 22: eine Schnittdarstellung eines Schnitts entlang der Schnittebene X-X in Fig. 21,
- Fig. 23: eine Draufsicht von oben auf die Mitnehmer der Rotationsvorrichtung nach Fig. 21,
- Fig. 24: eine Schnittdarstellung eines Schnitts entlang der Schnittebene XII-XII in Fig. 23,
- Fig. 25: die Schnittdarstellung aus Fig. 24, wobei sich die zweiten Mitnehmer im Freilaufzustand befinden,
- Fig. 26: eine perspektivische Darstellung der Schnittdarstellung aus Fig. 24 und
- Fig. 27: eine perspektivische Darstellung der Schnittdarstellung aus Fig. 25.

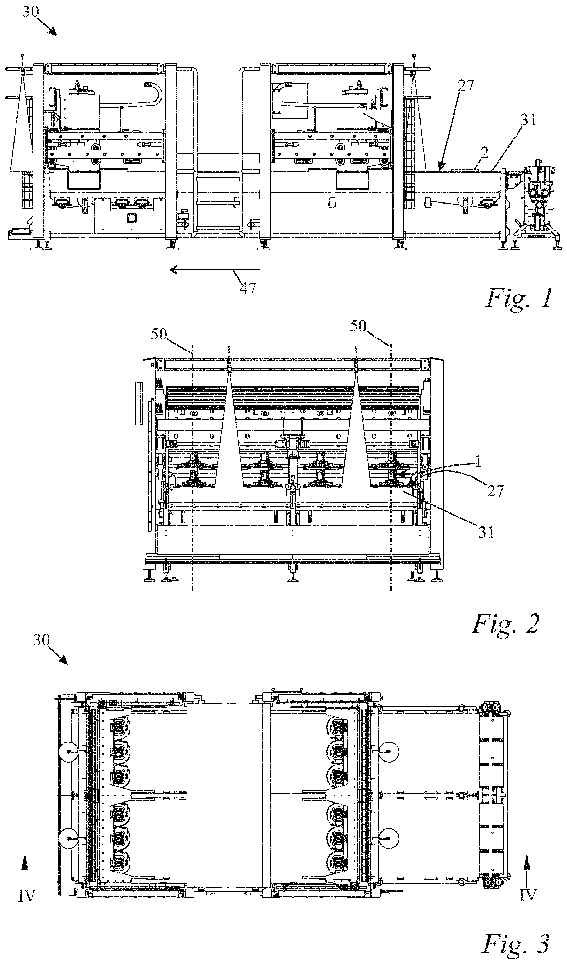

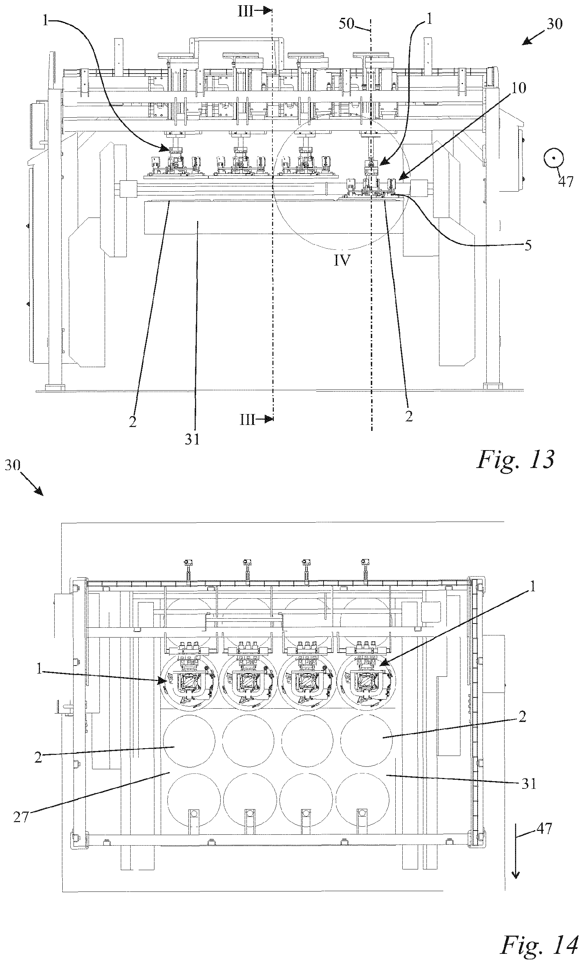

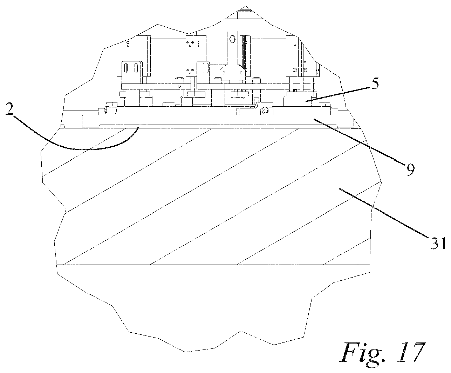

In den Figuren sind zwei Ausführungsbeispiele dargestellt. Das Ausführungsbeispiel nach den Figuren 1 bis 12 zeigt eine Rotationsvorrichtung gemäß eines ersten erfinderischen Gedankens. Das Ausführungsbeispiel nach den Figuren 13 bis 27 zeigt eine Rotationsvorrichtung gemäß eines zweiten erfinderischen Gedankens. In beiden Ausführungsbeispielen sind identische oder ähnliche Bauteile mit denselben Bezugszeichen bezeichnet.

Fig. 1 zeigt eine Fertigungsvorrichtung 30. Die Fertigungsvorrichtung 30 dient zur industriellen Fertigung eines flachen Backwerks. Das flache Backwerk wird aus einer in Fig. 1 schematisch dargestellten Teigscheibe 2 gefertigt.

Die Teigscheibe 2 besteht aus rohem Teig. Die Teigscheibe 2 wird auch als Teigboden bezeichnet. Die Teigscheibe 2 wird aus den üblichen Zutaten zur Herstellung eines Hefeteigs hergestellt. Diese Zutaten, wie beispielsweise Mehl, Wasser und Hefe, werden miteinander vermengt und zu einer Kugel geknetet. Die Kugel wird dann durch Auswalzen oder durch einen Stempel, der auf die Kugel gepresst wird, zu der Teigscheibe 2 umgeformt. Die Teigscheibe 2 weist zwei abgeflachte Seiten auf. Die Teigscheibe 2 aus rohem Teig ist in einem halbfesten, jedoch noch formbaren Zustand. So kann die Teigscheibe 2 beispielsweise weiter ausgewalzt oder umgeformt werden. Die Teigscheibe 2 ist in Draufsicht im Wesentlichen kreisförmig. In der Fertigungsvorrichtung 30 wird die Teigscheibe 2 typischerweise mit weiteren Zutaten belegt und gebacken.

Die Fertigungsvorrichtung 30 weist ein Transportband 31 auf. Das Transportband 31 fördert die Teigscheibe 2 in eine Förderrichtung 47. Wie in Fig. 1 dargestellt, liegt die Teigscheibe 2 auf dem Transportband 31 auf. Die Teigscheibe 2 liegt flächig an einer Oberfläche des Transportbands 31 an. Im Ausführungsbeispiel ist die Breite des Transportbands 31 so gewählt, dass mehrere, insbesondere sechs Teigscheiben 2 in Richtung quer zur Förderrichtung 47 nebeneinander angeordnet werden können. Es kann auch vorgesehen sein, dass vier Teigscheiben 2 in Richtung quer zur Förderrichtung 47 nebeneinander angeordnet sind. In Förderrichtung 47 sind mehrere Teigscheiben 2 hintereinander auf dem Transportband 31 angeordnet.

Die Fertigungsvorrichtung 30 umfasst eine in Fig. 2 teilweise zu erkennende Rotationsvorrichtung 1. Die Rotationsvorrichtung 1 dient zur Rotation der flachen Teigscheibe 2 um eine Rotationsachse 50. Die Rotationsvorrichtung 1 besitzt eine Auflagefläche 27. Die Auflagefläche 27 dient zur Auflage der Teigscheibe 2. Während der Rotation der Teigescheibe 2 um die Rotationsachse 50 rotiert die Teigscheibe 2 relativ zur Auflagefläche 27. Die Auflagefläche 27 ist bezüglich der Rotationsachse 50 unrotiert. Die Auflagefläche 27 ist eine flache Fläche. Die Auflagefläche 27 ist im Ausführungsbeispiel eben. In den Ausführungsbeispielen ist die Auflagefläche 27 durch das Transportband 31 gebildet. Die Rotationsachse 50 verläuft quer, im Ausführungsbeispiel senkrecht zu den flachen Seiten der Teigscheibe 2. Die Rotationsachse 50 verläuft quer, im Ausführungsbeispiel senkrecht zu der Auflagefläche 27 für die Teigscheibe 2. Die Rotationsachse 50 verläuft vorteilhaft in Richtung der Vertikalen. Die Rotationsachse 50 verläuft ungefähr durch die Mitte der flachen Teigscheibe 2. Im Falle einer kreisrunden flachen Teigscheibe 2 verläuft die Rotationsachse durch den Mittelpunkt des der Teigscheibe 2 zugeordneten Kreises.

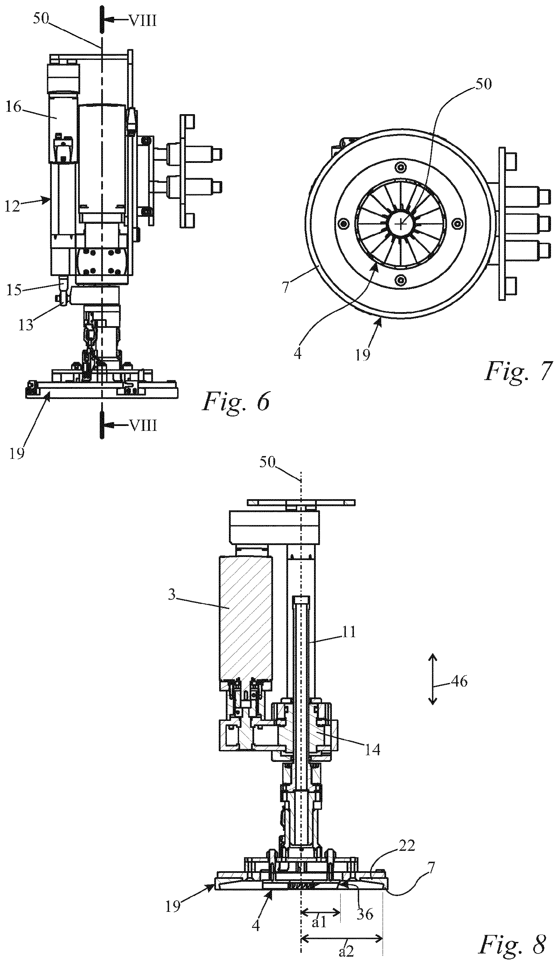

Wie beispielsweise in den Figuren 7, 8 und 9 dargestellt, umfasst die Rotationsvorrichtung 1 einen ersten Mitnehmer 4. Im Ausführungsbeispiel nach den Figuren 1 bis 12 umfasst die Rotationsvorrichtung 1 lediglich einen einzigen Mitnehmer, nämlich den ersten Mitnehmer 4. Der erste Mitnehmer 4 dient zur Übertragung von Drehmoment von der Rotationsvorrichtung 1 auf die Teigscheibe 2. Zur Erzeugung eines Drehmoments ist der erste Mitnehmer 4 rotierend um die Rotationsachse 50 antreibbar. Zum Antrieb des ersten Mitnehmers 4 ist ein in Fig. 8 dargestellter Antriebsmotor 3 vorgesehen. Mittels des Antriebsmotors 3 ist der erste Mitnehmer 4 rotierend antreibbar.

Der in den Figuren 7, 8 und 9 dargestellte erste Mitnehmer 4 ist dazu ausgelegt, ein Drehmoment auf die flache Teigscheibe 2 zu übertragen. Die Übertragung des Drehmoments vom ersten Mitnehmer 4 auf die Teigscheibe 2 erfolgt durch Eingreifen des ersten Mitnehmers 4 in die Teigscheibe 2.

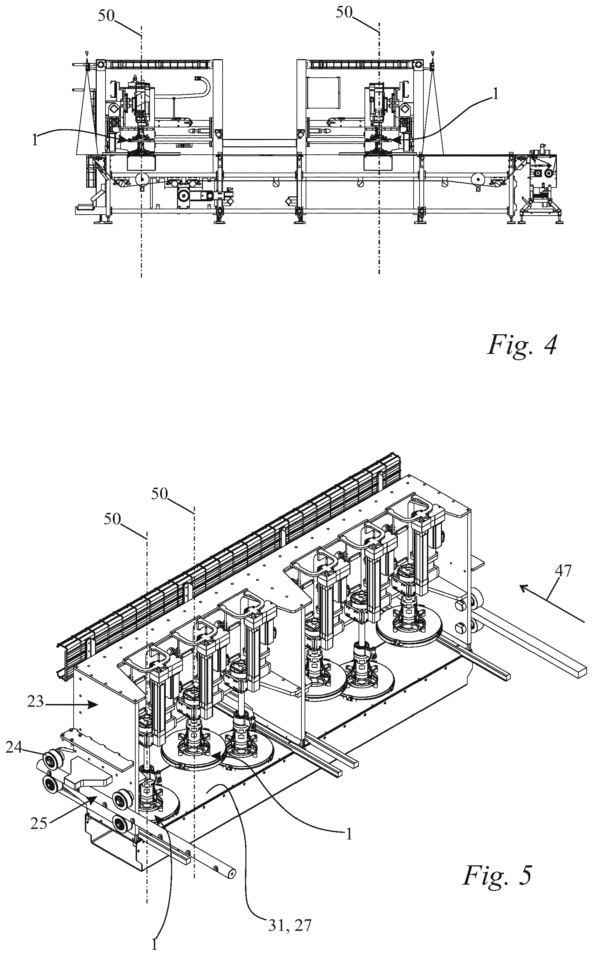

Wie insbesondere aus den Figuren 2, 4 und 5 in Zusammenschau mit Fig. 8 ersichtlich, ist der erste Mitnehmer 4 der Rotationsvorrichtung 1 zur Aufnahme und zur Abgabe einer Teigscheibe 2 in Richtung der Rotationsachse 50 auf das Transportband 31 zu und von dem Transportband 31 weg bewegbar gelagert. Fig. 5 zeigt ganz links eine Rotationsvorrichtung 1, die näher am Transportband 31 positioniert ist als die unmittelbar zu dieser ganz linken Rotationsvorrichtung 1 benachbarte Rotationsvorrichtung 1. Insbesondere ist der in Fig. 5 nicht dargestellte erste Mitnehmer 4 der ganz linke Rotationsvorrichtung 1 näher an dem Transportband 31 als der erste Mitnehmer 4 der unmittelbar zu dieser ganz linken Rotationsvorrichtung 1 benachbarten Rotationsvorrichtung 1 angeordnet. Die ganz linke Rotationsvorrichtung 1 und die unmittelbar hierzu benachbarte Rotationsvorrichtung 1 sind baugleich ausgebildet. Im Ausführungsbeispiel nach den Figuren 1 bis 12 sind alle Rotationsvorrichtungen 1 baugleich ausgebildet.

Im Ausführungsbeispiel sind bezüglich der Förderrichtung 47 auf gleicher Höhe mehrere, insbesondere sechs Rotationsvorrichtungen 1 nebeneinander angeordnet. Wie in Fig. 8 dargestellt, weist die Rotationsvorrichtung 1 einen Rotationsschaft 11 auf. Der Rotationsschaft 11 ist um die Rotationsachse 50 rotierend antreibbar. Der Antriebsmotor 3 treibt den Rotationsschaft 11 an. Über den Rotationsschaft 11 kann ein Drehmoment von dem Antriebsmotor 3 auf den ersten Mitnehmer 4 übertragen werden. Der Rotationsschaft 11 ist in einer Hubrichtung 46 in einem Grundgerüst 14 der Rotationsvorrichtung 1 beweglich gelagert. Durch Einschieben des Rotationsschafts 11 in das Grundgerüst 14 kann der erste Mitnehmer 4 von der Teigscheibe 2 bzw. von dem Transportband 31 entfernt werden. Durch Ausfahren des Rotationsschafts 11 aus dem Grundgerüst 14 kann der erste Mitnehmer 4 an die Teigscheibe 2 bzw. an das Transportband 31 angenähert werden.

Für diese Annäherung und Entfernung weist die Rotationsvorrichtung 1 eine in Fig. 6 dargestellte Hubvorrichtung 12 auf. Im Ausführungsbeispiel ist ein Kolben 15 der Hubvorrichtung 12 über ein Gelenk 13 mit dem Rotationsschaft 11 verbunden. Der Kolben 15 kann durch einen Zylinder 16 der Hubvorrichtung 12 ein- und ausgefahren werden. Der Kolben 15 kann relativ zu einem Gehäuse des Zylinders 16 ein- und ausgefahren werden. Dadurch wird der Rotationsschaft 11 aus dem Grundgerüst 14 der Rotationsvorrichtung 1 ein- und ausgefahren. Auf diese Weise kann der erste Mitnehmer 4 an die Teigscheibe 2 angenähert werden. Dabei greift der Mitnehmer 4 in die Teigscheibe 2 ein. Bei einer Rotation des ersten Mitnehmers 4 um die Rotationsachse 50 wird von dem ersten Mitnehmer 4 ein Drehmoment auf die Teigscheibe 2 übertragen. Im Ausführungsbeispiel ist die Hubvorrichtung 46 ein Elektrozylinder.

Aus der Zusammenschau der Figuren 5 und 8 ist ersichtlich, dass der erste Mitnehmer 4 oberhalb der Auflagefläche 27 angeordnet ist. In Hubrichtung 46 ist der erste Mitnehmer 4 über der Auflagefläche 27 angeordnet.

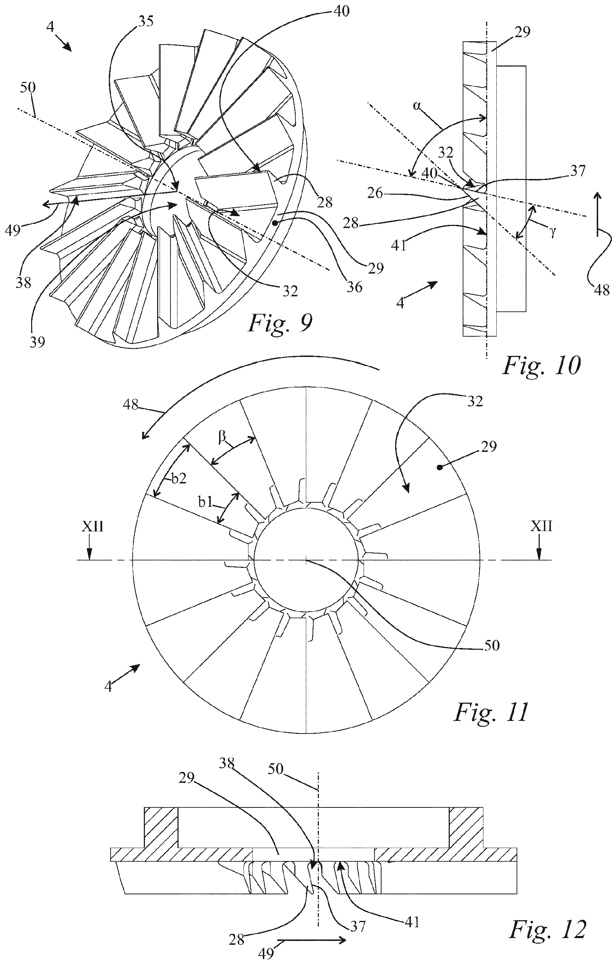

Wie in Fig. 9 dargestellt, besitzt der erste Mitnehmer 4 ein Eingreifelement 28. Der erste Mitnehmer 4 weist einen Grundkörper 29 auf. Der Grundkörper 29 ist scheibenförmig und weist in der Mitte ein Loch 39 auf. Das Eingreifelement 28 steht in Hubrichtung 46 in Richtung vom Antriebsmotor 3 weg über den Grundkörper 28 vor. Das Eingreifelement 28 steht in Richtung der Rotationsachse 50 in Richtung auf die Auflagefläche 27 über den Grundkörper 29 vor. Das Eingreifelement 28 dient zum Eingriff in die Teigscheibe 2. Der erste Mitnehmer 4 besitzt mehrere Eingreifelemente 28.

Die Eingreifelemente 28 drehen sich im Betrieb in einer Drehrichtung 48. Die Drehrichtung 48 läuft um die Rotationsachse 50 um. Die Drehrichtung 48 entspricht einer Umfangsrichtung um die Rotationsachse 50.

Der erste Mitnehmer 4 ist dazu ausgelegt mit den Eingreifelementen 28 in die flache Teigscheibe 2 einzugreifen und mittels der in die flache Teigscheibe 2 eingreifenden Eingreifelemente 28 Drehmoment auf die flache Teigscheibe zu übertragen. Beim Eingriff der Eingreifelemente 28 in die flache Teigscheibe 2 rotiert die flache Teigscheibe 2 um die Rotationsachse 50 in Relation zu der unrotierten Auflagefläche 27.

Das Eingreifelement 28 weist eine in Drehrichtung 48 vorne liegende Eingreiffläche 37 auf. Mittels der Eingreiffläche 37 ist Drehmoment von dem ersten Mitnehmer 4 auf die Teigscheibe 2 übertragbar. Die Eingreiffläche 37 kann durch eine Stufe im ersten Mitnehmer 4 gebildet sein.

Die Eingreifelemente 28 sind in Drehrichtung 48 nebeneinanderliegend angeordnet. Es sind mindestens drei, insbesondere mindestens vier, insbesondere mindestens fünf, im Ausführungsbeispiel mindestens acht Eingreifelemente 28 vorgesehen. Die Eingreifelemente 28 sind in Drehrichtung 49 regelmäßig verteilt. In Fig. 11 ist der Winkelabstand β zwischen zwei in Drehrichtung 49 unmittelbar benachbarten Eingreifelementen 28 eingezeichnet. Der Winkelabstand β ist in Drehrichtung 49 auf dem Grundkörper 29 gemessen. Der Winkelabstand β ist zwischen allen Eingreifelementen 28 gleich groß. Der Winkelabstand β entspricht dem Quotienten aus 360° und der Anzahl an Eingreifelementen 28. Der Winkelabstand β beträgt mindesten 5°, insbesondere mindestens 10°, im Ausführungsbeispiel mindestens 15°. Der Winkelabstand β beträgt höchstens 60°, insbesondere höchstens 40°, im Ausführungsbeispiel höchstens 30°.

Die Eingreifelemente 28 sind so gestaltet, dass sie eine Ausdehnung der flachen Teigscheibe 2 aufgrund der auf sie während der Rotation wirkenden Zentrifugalkraft in Radialrichtung 49 zulassen. Die Radialrichtung 49 zeigt in Richtung radial von der Rotationsachse 50 weg.

Der erste Mitnehmer 4 weist einen Kanal 32 auf. Der Kanal 32 ist bezüglich der Drehrichtung 49 zwischen den Eingreifelementen 28 angeordnet. Der Kanal 32 verläuft zwischen zwei in Drehrichtung 49 unmittelbar benachbarten Eingreifelementen 28. Im Ausführungsbeispiel sind zwischen allen benachbarten Eingreifelementen 28 Kanäle 32 vorgesehen. Der erste Mitnehmer 4 besitzt ein Zentrum 35. Das Loch 39 ist im Zentrum 35 angeordnet. Die Rotationsachse 50 verläuft durch das Zentrum 35. Der erste Mitnehmer 4 besitzt eine Außenseite 36, wie in Fig. 9 dargestellt. Die Außenseite 36 ist die Umfangsseite des ersten Mitnehmers 4. Die Außenseite 36 ist radial außenliegend. Der Kanal 32 erstreckt sich ausgehend vom Zentrum 35 hin zu der Außenseite 36. Der Kanal 32 verbindet das Zentrum 35 mit der Außenseite 36. Der Kanal 32 ist in Radialrichtung 49 in Richtung hin zum Zentrum 35 offen. Der Kanal 32 ist in Radialrichtung 49 in Richtung hin zur Außenseite 36 offen. Durch den Kanal 32 kann sich die Teigscheibe 2 während der Rotation in Radialrichtung 49 vom Zentrum 35 hin zur Außenseite 36 ausdehnen. Durch den Kanal 32 kann währen der Rotation Teigmasse der Teigscheibe 2 fließen. Der Kanal 32 ist in Radialrichtung 49 radial von der Rotationsachse 50 weg durch den ersten Mitnehmer 4 unbegrenzt. Im Ausführungsbeispiel erstreckt sich der Kanal 32 in Radialrichtung 49 radial zur Rotationsachse 50. Der Kanal 32 ist der Freiraum zwischen zwei in Drehrichtung 49 unmittelbar benachbarten Eingreifelementen 28. Der Kanal 32 ist in Richtung der Rotationsachse 50 in Richtung auf die Auflagefläche 27 hin offen. Der Kanal 32 ist lediglich in Drehrichtung 49 und in Richtung entgegen der Drehrichtung 49 durch die Eingreifelemente 28 und in Richtung der Rotationsachse 49 durch den Grundkörper 29 begrenzt.

Eine in Drehrichtung 49 auf dem Grundkörper 29 gemessene Breite des Kanals 32 nimmt mit zunehmendem Abstand zur Rotationsachse 50 zu. Wie in Fig. 11 dargestellt, besitzt der Kanal 32 eine radial innenliegende Breite b1 und eine radial außenliegende Breite b2. Die Breite b2 ist größer als die Breite b 1.

Das Eingreifelement 28 ist so gestaltet, dass es bei der Rotation der flachen Teigscheibe 2 ein Abheben der flachen Teigscheibe 2 von der Auflagefläche 27 zumindest in der Art bewirkt, dass die Haftreibungskraft zwischen der flachen Teigscheibe 2 und der Auflagefläche 27 überwunden ist. Das Eingreifelement 28 ist so gestaltet, dass es bei der Rotation der flachen Teigscheibe 2 ein Abheben der flachen Teigscheibe 2 von der Auflagefläche 27 in der Art bewirkt, dass zwischen der flachen Teigscheibe 2 und der Auflagefläche 27 lediglich Gleitreibungskräfte wirken.

Das Eingreifelement 28 ist so gestaltet, dass es bezüglich der Richtung der Rotationsachse 50 mit einem Hinterschnitt in die flache Teigscheibe 2 eingreift. Hierbei bewirkt die Eingreiffläche 37 auf die Teigscheibe 2 eine Kraft mit eine Kraftkomponenten in Richtung der Rotationsachse 50 in Richtung weg von der Auflagefläche 27. Die Eingreiffläche 37 ist in Richtung der Rotationsachse 50 in Richtung von dem Antriebsmotor 3 weg in Drehrichtung 48 geneigt. Dadurch greift das Eingreifelement 28 mit seiner Eingreiffläche 37 bei Rotation des ersten Mitnehmers 4 in die Teigscheibe 2 ein und nimmt die Teigscheibe 2 mit. Die Teigscheibe 2 wird von der Auflagefläche 27 abgehoben.

Der Grundkörper 29 besitzt eine Oberfläche 41, wie in Fig. 10 dargestellt. Die Oberfläche 41 ist der Auflagefläche 27 zugewandt. Auf der Oberfläche 41 des Grundkörpers 29 ist das Eingreifelement 28 angeordnet. Die Eingreiffläche 37 ist der Oberfläche 41 zugewandt. Die Eingreiffläche 37 des Eingreifelements 28 schließt mit der Oberfläche 41 des Grundkörper 29 einen Winkel α ein. Der Winkel α ist kleiner als 90°. Im Ausführungsbeispiel ist der Winkel α kleiner als 80°. Der Winkel α ist größer als 10°. Im Ausführungsbeispiel ist der Winkel α größer als 45°.

Das Eingreifelement 28 besitzt eine hintere Fläche 26. Die hintere Fläche 26 liegt in Drehrichtung 49 hinter der Eingreiffläche 37 des Eingreifelements 28. Die hintere Fläche 26 ist in Richtung der Rotationsachse 50 in Richtung von dem Antriebsmotor 3 weg in Drehrichtung 48 geneigt. In einem Schnitt in Drehrichtung 48 weist das Eingreifelement 28 einen im Wesentlichen dreieckigen Querschnitt auf. Das Eingreifelement 28 besitzt eine Spitzkante 40. Die Spitzkante 40 zeigt in Richtung weg von dem Grundkörper 29 hin zu der Auflagefläche 27. Die Spitzkante 40 zeigt in Drehrichtung 48. Die Spitzkante 40 erstreckt sich in Radialrichtung 49. Die Spitzkante 40 begrenzt die Eingreiffläche 37 in Richtung der Rotationsachse 50. Die Spitzkante 40 trennt die Eingreiffläche von der hinteren Fläche 26. Im Ausführungsbeispiel ist die Spitzkante 40 leicht abgerundet.

Die hintere Fläche 26 schließt mit der Eingreiffläche 37 einen Winkel γ ein, wie in Fig. 10 dargestellt. Der Winkel γ beträgt weniger als 45°, im Ausführungsbeispiel weniger als 35°. Der Winkel γ beträgt mehr als 10°, im Ausführungsbeispiel mehr als 25°.

Wie in Fig. 12 dargestellt, ist zwischen dem Eingreifelement 28 und dem Grundkörper 29 ein Hohlraum 38 ausgebildet. Der Hohlraum 38 befindet sich in Richtung der Rotationsachse 50 zwischen der Eingreiffläche 37 des Eingreifelements 28 und der Oberfläche 41 des Grundkörpers 29. Der Hohlraum 38 ist in Drehrichtung 49 nach vorne offen. Wie auch in Fig. 9 ersichtlich, ist der Hohlraum 38 in Radialrichtung 49 radial von der Rotationsachse 50 weg durch den ersten Mitnehmer 4 unbegrenzt. Der Hohlraum 38 ist Bestandteil des Kanals 32.

Die Rotationsvorrichtung 1 umfasst eine in den Fig. 6 bis 8 dargestellte Haube 19. Zur Aufnahme einer Teigscheibe 2 durch den ersten Mitnehmer 4 wird die Haube 19 über die Teigscheibe 2 gestülpt. Die Haube 19 dient zum Schutz der Teigscheibe 2 während des Rotationsvorgangs. Die Haube 19 ist drehfest mit dem Rotationsschaft 11 verbunden. Die Haube 19 ist in Hubrichtung 46 zwischen dem Antriebsmotor 3 und der Teigscheibe 2 angeordnet.

Die Rotationsvorrichtung 1 umfasst ein Begrenzungselement 7. Das Begrenzungselement 7 dient zur Begrenzung einer Bewegung der Teigscheibe 2 in Radialrichtung 49. Das Begrenzungselement 7 ist im Ausführungsbeispiel Teil der Haube 19. Die Haube 19 weist einen Tragkörper 22 auf (Fig. 8). Der Tragkörper 22 ist zwischen dem Begrenzungselement 7 und dem Rotationsschaft 11 angeordnet. Der Tragkörper 22 trägt das Begrenzungselement 7. Das Begrenzungselement 7 steht in Hubrichtung 46 in Richtung weg vom Antriebsmotor 3 über den Tragkörper 22 hervor. Das Begrenzungselement 7 übergreift die flache Teigscheibe 2. Das Begrenzungselement 7 ist bezüglich der Rotationsachse 50 radial weiter außenliegend als die Außenseite 36 der ersten Mitnehmers 4 angeordnet. Die Außenseite 36 besitzt einen maximalen Abstand a1 zur Rotationsachse 50. Das Begrenzungselement 7 besitzt einen minimalen Abstand a2 zur Rotationsachse 50. Der minimale Abstand a2 ist größer als der maximale Abstand a1. Der maximale Abstand a1 beträgt von 20% bis 70%, insbesondere von 30% bis 60%, im Ausführungsbeispiel von 40% bis 50% des minimalen Abstands a2. Der minimale Abstand a2 entspricht in etwa dem Radius der Teigscheibe 2 nach Beendigung des Rotationsvorgangs.

Im Ausführungsbeispiel läuft das Begrenzungselement 7 vollständig um die Rotationsachse 50 um. Das Begrenzungselement 7 weist eine Begrenzungsfläche 8 auf. Die Begrenzungsfläche 8 ist in Hubrichtung 46 in Richtung weg vom Antriebsmotor 3 zur Rotationsachse 50 hin geneigt. Bei der Rotation der Rotationsvorrichtung wird Teigmasse der Teigscheibe 2 aufgrund der Fliehkraft in Radialrichtung 49 in Richtung auf das Begrenzungselement 7 gedrückt. Aufgrund der Neigung der Begrenzungsfläche 8 wird die Bewegung der Teigscheibe 2 in Radialrichtung 49 in eine Bewegung auf dem Tragkörper 22 der Haube 19 zu umgelenkt. Dadurch wird verhindert, dass sich die Teigscheibe 2 in Radialrichtung 49 über das Begrenzungselement 7 hinaus bewegen kann. Aufgrund der Neigung der Begrenzungsfläche 8 wird eine Ausdehnung der Teigscheibe 2 in den Raum zwischen der Auflage der Teigscheibe 2 und dem Begrenzungselement 7 verhindert.

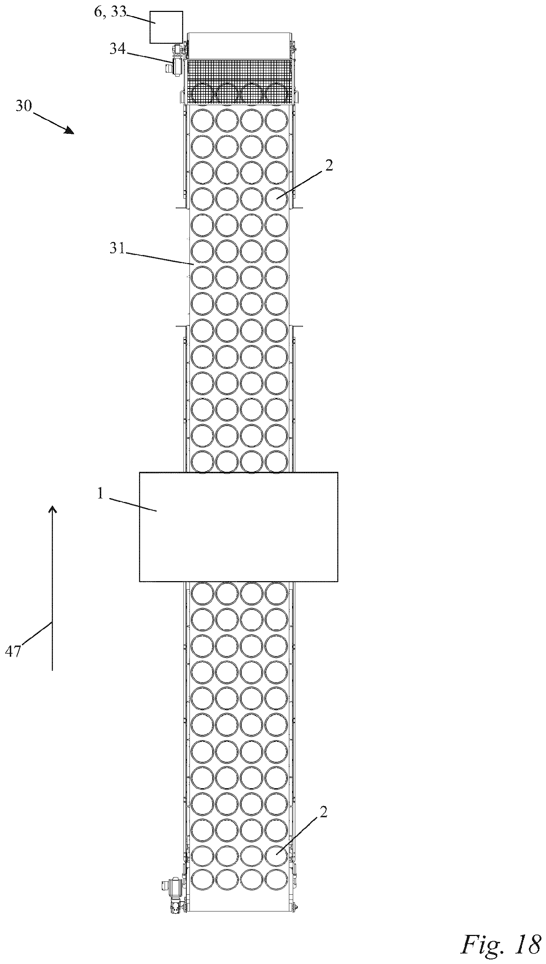

Wie aus den Fig. 1 bis 5 ersichtlich, ist die Rotationsvorrichtung 1 in den Fließbandablauf der Fertigungsvorrichtung 30 implementiert. Fig. 18 stellt diese Implementierung schematisch sowohl für das erste Ausführungsbeispiel gemäß der Figuren 1 bis 12 als auch für das zweite Ausführungsbeispiel gemäß der Figuren 13 bis 26 dar.

Die Fertigungsvorrichtung 1 weist einen Antrieb 34 zur Bewegung eines oberen Trums des Transportbands 31 in Förderrichtung 47 auf. Im Ausführungsbeispiel nach den Figuren 1 bis 12 steuert die Kontrollvorrichtung 33 die Fertigungsvorrichtung 30 so und die Fertigungsvorrichtung 30 ist so ausgelegt, dass die Teigscheibe 2 kontinuierlich in Förderrichtung 47 bewegt wird. Hierzu wird das Transportband 31 kontinuierlich vom Antrieb 34 angetrieben. Es kann aber auch vorgesehen sein, dass das Transportband 31 beim Ausführungsbeispiel nach den Figuren 1 bis 12 schrittweise angetrieben wird. Beim Ausführungsbeispiel nach den Figuren 13 bis 26 wird das Transportband 31 schrittweise angetrieben. Aber auch hier ist ein kontinuierlicher Antrieb möglich. Beim kontinuierlichen Antrieb des Transportbands 31 wird die Rotationsvorrichtung 1 mit dem Transportband 31 in Förderrichtung 47 mitbewegt, wenn die Teigscheibe 2 mittels des Transportbands 31 unter die Rotationsvorrichtung 1 bewegt und von der Rotationsvorrichtung 1 zur Rotation aufgenommen wird. Hierzu ist die Rotationsvorrichtung 1 im Ausführungsbeispiel nach den Figuren 1 bis 12 in einem Gestell 23 angeordnet. Das Gestell 23 weist Rollen 24 auf. Mittels der Rollen 24 ist das Gestell 23 auf Schienen 25 in Förderrichtung bewegbar.

Um die Teigscheibe 2 zu rotieren, wird Drehmoment mit dem ersten Mitnehmer 4 auf die Teigscheibe 2 übertragen.

Am Anfang des Rotationsvorgangs wird der erste Mitnehmer 4 mittels der Hubvorrichtung 12 so an das Transportband 31 angenähert, dass der erste Mitnehmer 4 in die Teigscheibe 2 eingreift. Am Ende des Rotationsvorgangs wird der erste Mitnehmer 4 mittels der Hubvorrichtung 12 so von dem Transportband 31 entfernt, dass der erste Mitnehmer 4 nicht in die Teigscheibe 2 eingreift.

Nach der Beendigung des Rotationsvorgangs der Teigscheibe 2 liegt die Teigscheibe 2 wieder auf dem Transportband 31 der Fertigungsvorrichtung 30. Die Teigscheibe 2 wird dann wieder mittels des Transportbands 31 in Förderrichtung 47 weiter befördert. Das Transportband 31 läuft während des gesamten Rotationsvorgangs unterhalb der Teigscheibe 2 mit der Teigscheibe 2 und der Rotationsvorrichtung 1 in Förderrichtung 47 mit. Nach dem Rotationsvorgang der Teigscheibe 2 kann die Teigscheibe 2 in der Fertigungsvorrichtung 30 beispielsweise belegt und anschließend gebacken werden.

Das industrielle Fertigungsverfahren zur Rotation der flachen Teigscheibe 2 auf der unrotierten Auflagefläche 27 gemäß des ersten erfinderischen Gedankens umfasst folgende Schritte:
- zur Rotation der Teigscheibe 2 um die Rotationsachse 50, die quer, insbesondere senkrecht zu den abgeflachten Seiten der Teigscheibe 2 verläuft, wird mittels des ersten Mitnehmers 4 von oben in die Teigscheibe 2 eingegriffen,
- anschließend wird die Rotationsfrequenz der Teigscheibe 2 ausgehend vom unrotierten Zustand so erhöht, dass die Haftreibung zwischen der Teigscheibe 2 und der Auflagefläche 27 überwunden wird, ohne dass es zu einer Verdrillung der Teigscheibe 2 kommt.

Aufgrund der beschriebenen Gestaltung des ersten Mitnehmers 4 kann sich die Teigscheibe 2 in Radialrichtung 49 ungehindert durch den Mitnehmer 4 ausdehnen. Der erste Mitnehmer 4 ist kompakt gestaltet und greift lediglich minimalinvasiv in die Teigscheibe 2 ein. Dadurch ähnelt die fertig rotierte Teigscheibe 2 einer handwerklich durch Rotation auf einem Finger hergestellten Teigscheibe. Die gilt insbesondere hinsichtlich der Eigenschaften das Dickenprofil der Teigscheibe 2 in Radialrichtung 49 betreffend, hinsichtlich der Lockerheit der Teigmasse und hinsichtlich des Geschmacks. Im Zentrum 35, insbesondere bei der Rotationsachse 50 ist die in Richtung der Rotationsachse 50 gemessene Dicke der Teigscheibe 2 höchstens halb so groß, insbesondere höchstens ein Drittel so groß wie die Dicke der Teigscheibe 2 an ihrem Außenrand.

Die Figuren 13 bis 27 zeigen ein Ausführungsbeispiel gemäß eines zweiten, eigenständigen erfinderischen Gedankens. Die Figuren 13 bis 27 zeigen wiederum eine Fertigungsvorrichtung 30 mit einer Rotationsvorrichtung 1. Im Wesentlichen unterscheidet sich dieses zweite Ausführungsbeispiel vom ersten Ausführungsbeispiel dadurch, dass in der Rotationsvorrichtung 1 ein zweiter Mitnehmer 5 vorgesehen ist. Ansonsten - hinausgehend über Änderungen die mit der Implementierung des zweiten Mitnehmers 5 verbunden sind - ist die Rotationsvorrichtung 1 des zweiten Ausführungsbeispiels identisch zu der Rotationsvorrichtung 1 des ersten Ausführungsbeispiels gestaltet.

Fig. 13 zeigt die Fertigungsvorrichtung 30. Die Fertigungsvorrichtung 30 dient zur industriellen Fertigung eines flachen Backwerks. Das flache Backwerk wird aus einer Teigscheibe 2 gefertigt.

Die Teigscheibe 2 besteht aus rohem Teig. Die Teigscheibe 2 wird auch als Teigboden bezeichnet. Die Teigscheibe 2 wird aus den üblichen Zutaten zur Herstellung eines Hefeteigs hergestellt. Diese Zutaten, wie beispielsweise Mehl, Wasser und Hefe, werden miteinander vermengt und zu einer Kugel geknetet. Die Kugel wird dann durch Auswalzen oder durch einen Stempel, der auf die Kugel gepresst wird, zu der Teigscheibe 2 umgeformt. Die Teigscheibe 2 weist zwei abgeflachte Seiten auf. Die Teigscheibe 2 aus rohem Teig ist in einem halbfesten, jedoch noch formbaren Zustand. So kann die Teigscheibe 2 beispielsweise weiter ausgewalzt oder umgeformt werden. Die Teigscheibe 2 ist in Draufsicht im Wesentlichen kreisförmig. In der Fertigungsvorrichtung 30 wird die Teigscheibe 2 typischerweise mit weiteren Zutaten belegt und gebacken.

Die Fertigungsvorrichtung 30 weist ein Transportband 31 auf. Das Transportband 31 fördert die Teigscheibe 2 in eine Förderrichtung 47. Wie in Fig. 13 dargestellt, liegt die Teigscheibe 2 auf dem Transportband 31 auf. Die Teigscheibe 2 liegt flächig an einer Oberfläche des Transportbands 31 an. Im Ausführungsbeispiel ist die Breite des Transportbands 31 so gewählt, dass mehrere, insbesondere vier Teigscheiben 2 in Richtung quer zur Förderrichtung 47 nebeneinander angeordnet werden können. Wie in Fig. 14 gezeigt, sind in Förderrichtung 47 mehrere Teigscheiben 2 hintereinander auf dem Transportband 31 angeordnet.

Die Fertigungsvorrichtung 30 umfasst die Rotationsvorrichtung 1. Die Rotationsvorrichtung 1 dient zur Rotation der flachen Teigscheibe 2 um eine Rotationsachse 50. Die Rotationsachse 50 verläuft quer, im Ausführungsbeispiel senkrecht zu den flachen Seiten der Teigscheibe 2. Die Rotationsachse 50 verläuft quer, im Ausführungsbeispiel senkrecht zu der durch das Transportband 31 gebildeten Auflagefläche für die Teigscheibe 2. Die Rotationsachse 50 verläuft vorteilhaft in Richtung der Vertikalen. Die Rotationsachse 50 verläuft ungefähr durch die Mitte der flachen Teigscheibe 2. Im Falle einer kreisrunden flachen Teigscheibe 2 verläuft die Rotationsachse durch den Mittelpunkt des der Teigscheibe 2 zugeordneten Kreises.

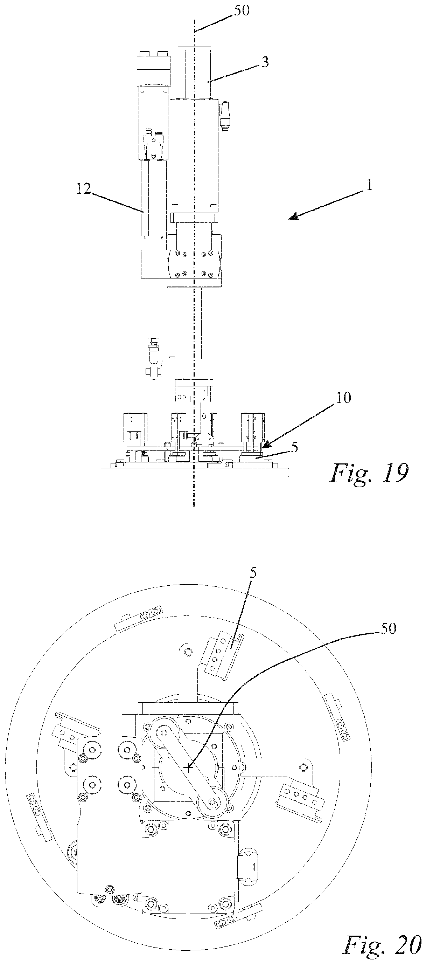

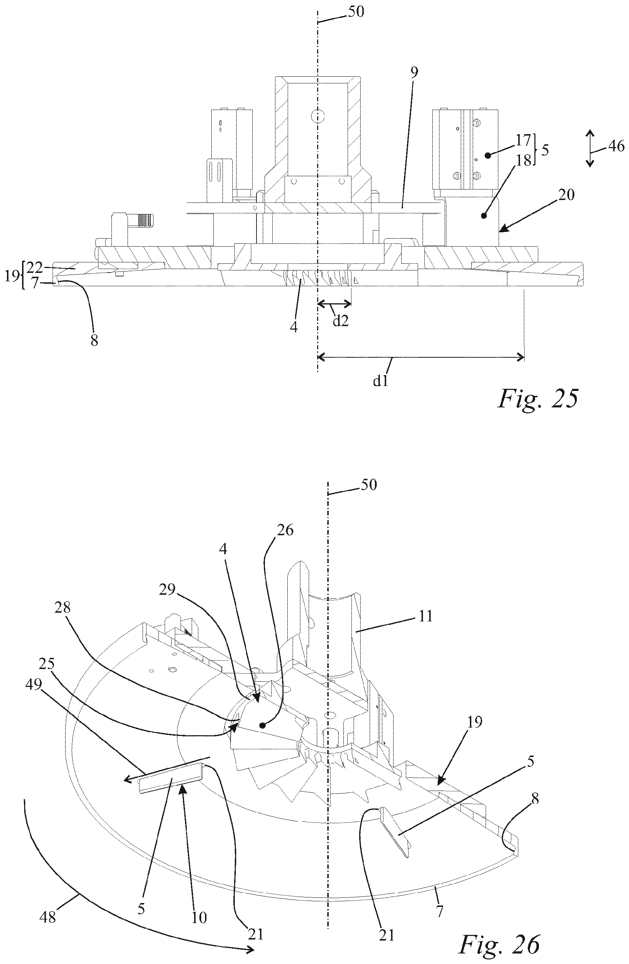

Wie in Fig. 26 dargestellt, umfasst die Rotationsvorrichtung 1 einen ersten Mitnehmer 4. Der erste Mitnehmer 4 dient zur Übertragung von Drehmoment von der Rotationsvorrichtung 1 auf die Teigscheibe 2. Die Rotationsvorrichtung 1 nach dem zweiten Ausführungsbeispiel umfasst den zweiten Mitnehmer 5. Der zweite Mitnehmer 5 dient zur Übertragung von Drehmoment von der Rotationsvorrichtung 1 auf die Teigscheibe 2. Der zweite Mitnehmer 5 ist bezüglich der Rotationsachse 50 radial weiter außen liegend als der erste Mitnehmer angeordnet. Der zweite Mitnehmer 5 weist in Radialrichtung 49 einen Abstand zu dem ersten Mitnehmer 4 auf. Die Radialrichtung 49 erstreckt sich radial zur Rotationsachse 50. Zur Erzeugung eines Drehmoments ist der erste Mitnehmer 4 rotierend um die Rotationsachse 50 antreibbar. Zum Antrieb des ersten Mitnehmers 4 ist ein in Fig. 19 dargestellter Antriebsmotor 3 vorgesehen. Mittels des Antriebsmotors 3 ist der erste Mitnehmer 4 rotierend antreibbar. Der zweite Mitnehmer 5 ist rotierend um die Rotationsachse 50 antreibbar. Der zweite Mitnehmer 5 ist mit derselben Rotationsfrequenz wie der erste Mitnehmer 4 um die Rotationsachse 50 rotierend antreibbar. Es kann vorgesehen sein, dass der Antrieb des zweiten Mitnehmers 5 von dem Antrieb des ersten Mitnehmers 4 separat ausgebildet ist. Im Ausführungsbeispiel werden sowohl der erste Mitnehmer 4 als auch der zweite Mitnehmer 5 vom selben Antriebsmotor 3 angetrieben.

Der in Fig. 26 dargestellte erste Mitnehmer 4 ist dazu ausgelegt, ein Drehmoment auf die flache Teigscheibe 2 zu übertragen. Die Übertragung des Drehmoments vom ersten Mitnehmer 4 auf die Teigscheibe 2 erfolgt im Ausführungsbeispiel durch Eingreifen des ersten Mitnehmers 4 in die Teigscheibe 2. Es kann aber auch vorgesehen sein, dass der erste Mitnehmer 4 in Form einer Düse ausgebildet ist, die die Teigscheibe 2 ansaugt und auf diese Weise Drehmoment auf die Teigscheibe 2 überträgt.

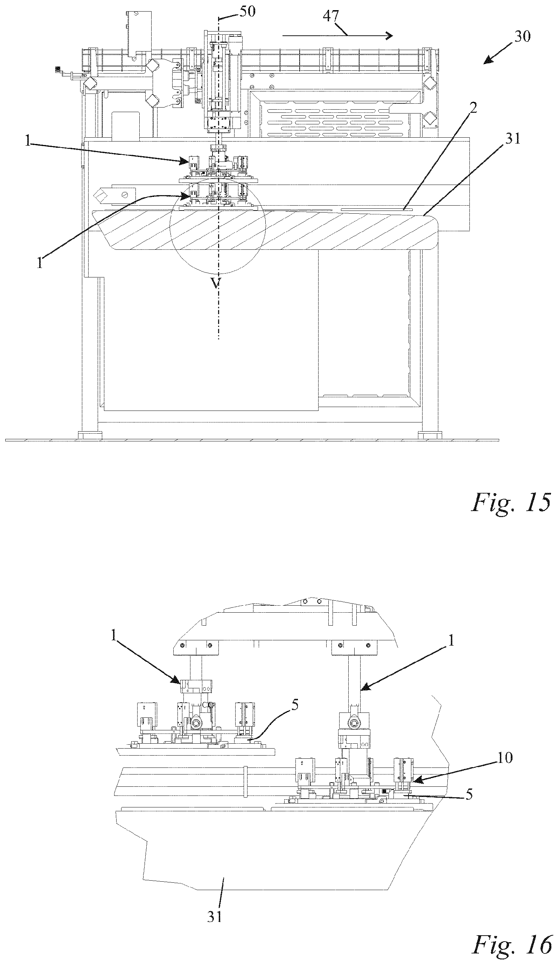

Wie aus den Fig. 13, 15 und 16 ersichtlich, ist der erste Mitnehmer 4 der Rotationsvorrichtung 1 zur Aufnahme und zur Abgabe einer Teigscheibe 2 in Richtung der Rotationsachse 50 auf das Transportband 31 zu und von dem Transportband 31 weg bewegbar gelagert. Fig. 16 zeigt auf der rechten Seite eine Rotationsvorrichtung 1, die näher am Transportband 31 positioniert ist als die daneben auf der linken Seite sichtbare Rotationsvorrichtung 1. Insbesondere ist der in Fig. 16 nicht dargestellte erste Mitnehmer 4 der rechten Rotationsvorrichtung 1 näher an dem Transportband 31 als der erste Mitnehmer 4 der linken Rotationsvorrichtung 1 angeordnet. Die rechte Rotationsvorrichtung 1 und die linke Rotationsvorrichtung 1 sind baugleich ausgebildet.

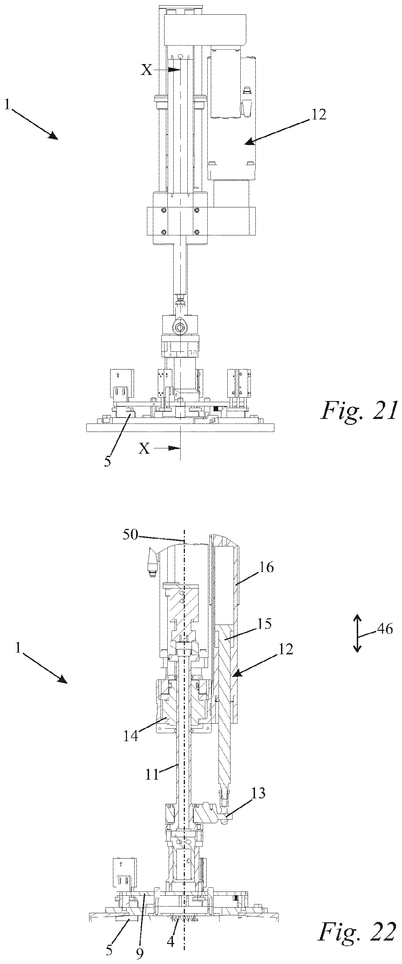

Im Ausführungsbeispiel sind bezüglich der Förderrichtung 47 auf gleicher Höhe mehrere, insbesondere vier Rotationsvorrichtungen 1 nebeneinander angeordnet. Wie in Fig. 22 dargestellt, weist die Rotationsvorrichtung 1 einen Rotationsschaft 11 auf. Der Rotationsschaft 11 ist um die Rotationsachse 50 rotierend antreibbar. Der Antriebsmotor 3 treibt den Rotationsschaft 11 an. Über den Rotationsschaft 11 kann ein Drehmoment von dem Antriebsmotor 3 auf den ersten Mitnehmer 4 und den zweiten Mitnehmer 5 übertragen werden. Der Rotationsschaft 11 ist in einer Hubrichtung 46 in einem Grundgerüst 14 der Rotationsvorrichtung 1 beweglich gelagert. Durch Einschieben des Rotationsschafts 11 in das Grundgerüst 14 kann der erste Mitnehmer 4 von der Teigscheibe 2 bzw. von dem Transportband 31 entfernt werden. Durch Ausfahren des Rotationsschafts 11 aus dem Grundgerüst 14 kann der erste Mitnehmer 4 an die Teigscheibe 2 bzw. an das Transportband 31 angenähert werden.

Für diese Annäherung und Entfernung weist die Rotationsvorrichtung 1 eine Hubvorrichtung 12 auf. Im Ausführungsbeispiel ist ein Kolben 15 der Hubvorrichtung 12 über ein Gelenk 13 mit dem Rotationsschaft 11 verbunden. Der Kolben 15 kann relativ zu einem Zylinder 16 der Hubvorrichtung 12 ein- und ausgefahren werden. Dadurch wird der Rotationsschaft 11 aus dem Grundgerüst 14 der Rotationsvorrichtung 1 ein- und ausgefahren. Auf diese Weise kann der erste Mitnehmer 4 an die Teigscheibe 2 angenähert werden. Dabei greift der Mitnehmer 4 in die Teigscheibe 2 ein. Bei einer Rotation des ersten Mitnehmers 4 um die Rotationsachse 50 wird von dem ersten Mitnehmer 4 ein Drehmoment auf die Teigscheibe 2 übertragen. Im Ausführungsbeispiel ist die Hubvorrichtung 46 ein Elektrozylinder.

Wie in Fig. 26 dargestellt, weist der erste Mitnehmer 4 ein Eingreifelement 28 auf. Der erste Mitnehmer 4 weist einen Grundkörper 29 auf. Das Eingreifelement 28 steht in Hubrichtung 46 in Richtung vom Antriebsmotor 3 weg über den Grundkörper 29 vor. Das Eingreifelement 28 dient zum Eingriff in die Teigscheibe 2. Vorteilhaft weist der erste Mitnehmer 4 mehrere Eingreifelemente 28 auf. Die Eingreifelemente 28 sind in Drehrichtung 48 der Rotationsachse 50 nebeneinanderliegend angeordnet. Die Drehrichtung 48 läuft um die Rotationsachse 50 um. Die Drehrichtung 48 zeigt in die Rotationsrichtung des ersten Mitnehmers 4. Das Eingreifelement 28 besitzt eine Eingreiffläche 37. Das Eingreifelement 28 besitzt eine hintere Fläche 26. Die Eingreiffläche 37 liegt in Drehrichtung 48 vorne. Die hintere Fläche 26 liegt in Drehrichtung 26 hinten. Eingreiffläche 37 ist in Hubrichtung 46 in Richtung von dem Antriebsmotor 3 weg in Drehrichtung 48 geneigt. Dadurch greift das Eingreifelement 28 mit seiner Eingreiffläche 37 bei Rotation des ersten Mitnehmers 4 in die Teigscheibe 2 ein und nimmt die Teigscheibe 2 mit. Die hintere Fläche 26 ist in Hubrichtung 46 in Richtung von dem Antriebsmotor 3 weg in Drehrichtung 48 geneigt.

Der erste Mitnehmer 4 gemäß des zweiten Ausführungsbeispiels ist baugleich zu dem ersten Mitnehmer 4 gemäß des ersten Ausführungsbeispiels und weist dementsprechend alle hierzu beschriebenen Eigenschaften auf.

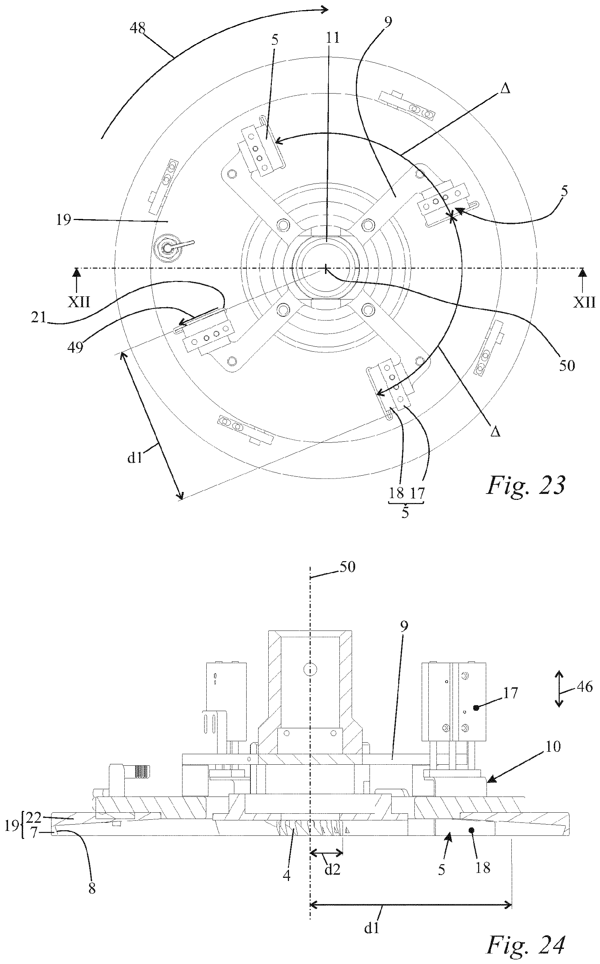

Wie in Fig. 23 dargestellt, ist der zweite Mitnehmer 5 in einem in Radialrichtung 49 gemessenen maximalen Abstand d1 zur Rotationsachse 50 angeordnet. Mit maximalem Abstand zur Rotationsachse 50 ist der Abstand an dem Punkt eines Bauteils bezeichnet, der die größte Entfernung zur Rotationsachse 50 aufweist. Aus den Figuren 24 und 26 ergibt sich, dass der erste Mitnehmer 4 in einem maximalen Abstand d2 zur Rotationsachse 50 angeordnet ist. Der zweite Mitnehmer 5 ist ebenfalls zum Eingriff in die flache Teigscheibe 2 vorgesehen. Die flache Teigscheibe 2 besitzt also einen Radius, der mindestens dem maximalen Abstand d1 zwischen Rotationsachse 50 und zweitem Mitnehmer 5 entspricht. Wie sich aus der Zusammenschau der Fig. 23 und 24 ergibt, beträgt der maximale Abstand d2 zwischen Rotationsachse 50 und erstem Mitnehmer 4 weniger als ein Drittel, insbesondere weniger als ein Viertel des maximalen Abstands d1 zwischen Rotationsachse 50 und zweitem Mitnehmer 5.

Bei einer Rotation des ersten Mitnehmers 4 bei Eingriff des ersten Mitnehmers 4 in die flache Teigscheibe 2 wird das Drehmoment des ersten Mitnehmers 4 unmittelbar auf den Bereich der flachen Teigscheibe 2 übertragen, in den der erste Mitnehmer 4 eingreift. Auf Bereiche der Teigscheibe 2, in die der erste Mitnehmer 4 nicht eingreift, wird das Drehmoment des ersten Mitnehmers 4 für den Fall, dass Drehmoment von der Rotationsvorrichtung 1 auf die Teigscheibe 2 ausschließlich über den ersten Mitnehmer 4 übertragen wird, lediglich aufgrund der Bindungskräfte der Teigmasse übertragen. Zu Beginn der Rotationsbewegung des ersten Mitnehmers 4 liegt die Teigscheibe 2 auf der Auflagefläche auf. Um die Teigscheibe 2 in Rotation zu versetzen, muss zunächst die Reibungskraft zwischen der Teigscheibe 2 und der Auflage überwunden werden. Auf die Teigscheibe 2 muss ein Drehmoment ausgeübt werden, das größer als das durch die Reibungskraft bewirkte Reibmoment ist. Wenn die Reibungskraft jedoch größer als die inneren Bindungskräfte der Teigmasse ist, käme es bei Drehmomentübertragung ausschließlich über den ersten Mitnehmer 4 zu Rissen in der Teigscheibe 2 und lediglich ein Teil der Teigscheibe 2 würde rotiert. Der restliche Teil der Teigscheibe 2 bliebe auf der Auflage liegen. Um dieses Szenario zu vermeiden, ist der zweite Mitnehmer 5 vorgesehen. Der zweite Mitnehmer 5 unterstützt bei der anfänglichen Überwindung der Haftreibungskräfte. Der zweite Mitnehmer 5 ist nicht zwingend erforderlich.

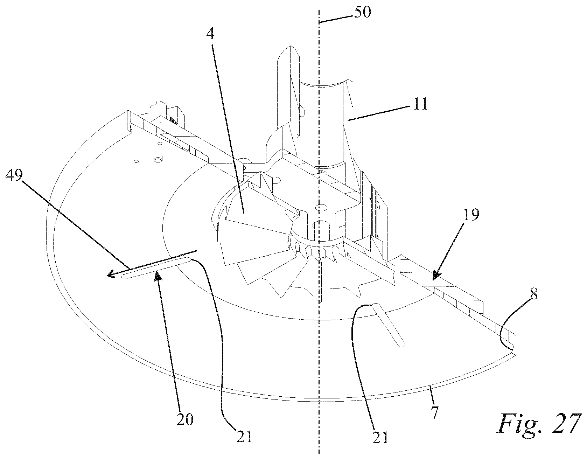

Der zweite Mitnehmer 5 weist einen in den Figuren 24 und 26 dargestellten Mitnahmezustand 10 auf. Der zweite Mitnehmer 5 weist einen in den Figuren 26 und 27 dargestellten Freilaufzustand 20 auf. Im Mitnahmezustand 10 des zweiten Mitnehmers 5 ist Drehmoment vom zweiten Mitnehmer 5 auf die flache Teigscheibe 2 übertragbar. Im Freilaufzustand 20 des zweiten Mitnehmers 5 ist der zweite Mitnehmer 5 an einer Übertragung von Drehmoment von der Rotationsvorrichtung 1 auf die flache Teigscheibe 2 unbeteiligt. Im Freilaufzustand 20 des zweiten Mitnehmers 5 überträgt der zweite Mitnehmer kein Drehmoment von der Rotationsvorrichtung 1 auf die flache Teigscheibe 2. Im Freilaufzustand 20 wird das Drehmoment von der Rotationsvorrichtung 1 auf die flache Teigscheibe 2 im Ausführungsbeispiel ausschließlich durch den ersten Mitnehmer 4 übertragen.

Der zweite Mitnehmer 5 ist ein Eingreifteil zum Eingriff in die Teigscheibe 2. Die Rotationsvorrichtung 1 ist derart ausgelegt, dass der zweite Mitnehmer 5 im Mitnahmezustand 10 in die Teigscheibe 2 eingreift. Der zweite Mitnehmer 5 ist dazu ausgelegt, im Mitnahmezustand 10 einen Teil der Teigscheibe 2 festzuhalten. Es kann auch vorgesehen sein, dass der zweite Mitnehmer im Mitnahmezustand einen Teil der Teigscheibe 2 ansaugt und so für eine Übertragung des Drehmoments auf die Teigscheibe 2 sorgt. Die Rotationsvorrichtung 1 ist derart ausgelegt, dass die Teigscheibe 2 im Freilaufzustand 20 frei von einem Eingriff des zweiten Mitnehmers 5 ist. Im Freilaufzustand 20 greift der zweite Mitnehmer 5 nicht in die Teigscheibe 2 ein.

Wie in Fig. 23 dargestellt, umfasst die Rotationsvorrichtung 1 im zweiten Ausführungsbeispiel einen Ausleger 9. Der Ausleger 9 ist drehfest mit dem Rotationsschaft 11 verbunden. Der zweite Mitnehmer 5 ist über den Ausleger 9 mit dem Rotationsschaft 11 verbunden. Der zweite Mitnehmer 5 ist an dem Ausleger 9 angeordnet.

Wie in Fig. 24 dargestellt, umfasst der zweite Mitnehmer 5 einen Befestigungskörper 17 und einen Mitnahmekörper 18. Der Mitnahmekörper 18 ist in Hubrichtung 46 gegenüber dem Befestigungskörper 17 beweglich am Befestigungskörper 17 gelagert. Der Befestigungskörper 17 ist an dem Ausleger 9 befestigt. Der Mitnahmekörper 18 dient zum Eingriff in die flache Teigscheibe 2. Der Mitnahmekörper 18 kann aus dem Befestigungskörper 17 in Hubrichtung 46 in Richtung weg von dem Antriebsmotor 3 ausgefahren werden. Der Mitnahmekörper 18 kann in den Befestigungskörper 17 in Hubrichtung 46 in Richtung hin zu dem Antriebsmotor 3 eingefahren werden.

Im Mitnahmezustand 10 des zweiten Mitnehmers 5 ist der Mitnahmekörper 18 aus dem Befestigungskörper 17 ausgefahren, wie in den Figuren 24 und 26 dargestellt. Im Freilaufzustand 20 des zweiten Mitnehmers 5 ist der Mitnahmekörper 18 in den Befestigungskörper 17 eingefahren, wie in den Figuren 25 und 27 dargestellt. Die Rotationsbewegung des Rotationsschafts 11 ist im Mitnahmezustand 10 des zweiten Mitnehmers 5 vom zweiten Mitnehmer 5 auf die flache Teigscheibe 2 übertragbar. Im Freilaufzustand 20 des zweiten Mitnehmers 5 trägt der zweite Mitnehmer 5 nicht zu einer Übertragung der Rotationsbewegung des Rotationsschafts 11 auf die flache Teigscheibe 2 bei. Wie in den Fig. 23 und 26 dargestellt, erstreckt sich der zweite Mitnehmer in Radialrichtung 49 bezüglich der Rotationsachse 50. Der Mitnahmekörper 18 des zweiten Mitnehmers 5 besitzt in Radialrichtung 49 eine Ausdehnung a. Wie in Fig. 23 dargestellt, beträgt die Ausdehnung a mehr als ein Viertel des maximalen Abstands d1 zwischen Rotationsachse 50 und zweitem Mitnehmer 5.

Die Rotationsvorrichtung 1 umfasst eine in den Fig. 23 bis 27 dargestellte Haube 19. Zur Aufnahme einer Teigscheibe 2 durch den ersten Mitnehmer 4 wird die Haube 19 über die Teigscheibe 2 gestülpt. Die Haube 19 dient zum Schutz der Teigscheibe 2 während des Rotationsvorgangs. Die Haube 19 ist drehfest mit dem Rotationsschaft 11 verbunden. Die Haube 19 ist in Hubrichtung 46 zwischen dem Ausleger 9 und der Teigscheibe 2 angeordnet. Die Haube 9 weist im zweiten Ausführungsbeispiel einen Schlitz 21 auf. Der Schlitz 21 ist für den zweiten Mitnehmer 5 vorgesehen. Durch den Schlitz 21 der Haube 19 kann der Mitnahmekörper 18 des zweiten Mitnehmers 5 in die Teigscheibe 2 eingreifen. Der Schlitz 21 erstreckt sich in Radialrichtung 49.

Die Rotationsvorrichtung 1 umfasst ein Begrenzungselement 7. Das Begrenzungselement 7 dient zur Begrenzung einer Bewegung der Teigscheibe 2 in Radialrichtung 49. Das Begrenzungselement 7 ist im Ausführungsbeispiel Teil der Haube 19. Die Haube 19 weist einen Tragkörper 22 auf (Fig. 25). Der Tragkörper 22 ist zwischen dem Begrenzungselement 7 und dem Rotationsschaft 11 angeordnet. Der Tragkörper 22 trägt das Begrenzungselement 7. Das Begrenzungselement 7 steht in Hubrichtung 46 in Richtung weg vom Antriebsmotor 3 über den Tragkörper 22 hervor. Das Begrenzungselement 7 übergreift die flache Teigscheibe 2. Das Begrenzungselement 7 ist bezüglich der Rotationsachse 50 radial weiter außenliegend als der zweite Mitnehmer 5 angeordnet. Im Ausführungsbeispiel läuft das Begrenzungselement 7 vollständig um die Rotationsachse 50 um. Das Begrenzungselement 7 weist eine Begrenzungsfläche 8 auf. Die Begrenzungsfläche 8 ist in Hubrichtung 46 in Richtung weg vom Antriebsmotor 3 zur Rotationsachse 50 hin geneigt. Bei der Rotation der Rotationsvorrichtung wird Teigmasse der Teigscheibe 2 aufgrund der Fliehkraft in Radialrichtung 49 in Richtung auf das Begrenzungselement 7 gedrückt. Aufgrund der Neigung der Begrenzungsfläche 8 wird die Bewegung der Teigscheibe 2 in Radialrichtung 49 in eine Bewegung auf dem Tragkörper 22 der Haube 19 zu umgelenkt. Dadurch wird verhindert, dass sich die Teigscheibe 2 in Radialrichtung 49 über das Begrenzungselement 7 hinaus bewegen kann. Aufgrund der Neigung der Begrenzungsfläche 8 wird eine Ausdehnung der Teigscheibe 2 in den Raum zwischen der Auflage der Teigscheibe 2 und dem Begrenzungselement 7 verhindert.

Wie in Fig. 23 dargestellt, umfasst die Rotationsvorrichtung 1 mindestens zwei zweite Mitnehmer 5. Im Ausführungsbeispiel umfasst die Rotationsvorrichtung 1 mehrere, insbesondere vier zweite Mitnehmer 5. Die mindestens zwei zweiten Mitnehmer 5 sind in Drehrichtung 48 bezüglich der Rotationsachse 50 in einem Winkelabstand Δ zueinander angeordnet. Im Ausführungsbeispiel beträgt der Winkelabstand Δ zwischen zwei benachbarten zweiten Mitnehmern 5 zwischen 70° und 110°, insbesondere zwischen 80° und 100°, bevorzugt 90°. Die mindestens zwei zweiten Mitnehmer 5 sind alle in derselben, senkrecht zur Rotationsachse 50 verlaufenden Ebene angeordnet.

Die Rotationsvorrichtung 1 weist eine in Fig. 18 schematisch dargestellte Steuereinheit 6 auf. Die Steuereinheit 6 ist zur Steuerung des zweiten Mitnehmers 5 vorgesehen. Im Ausführungsbeispiel ist die Steuereinheit 6 Teil einer Kontrollvorrichtung 33 der Fertigungsvorrichtung 30. Es kann aber auch vorgesehen sein, dass die Steuereinheit 6 separat von der Kontrollvorrichtung 33 ausgebildet ist. Die Steuereinheit 6 steuert den zweiten Mitnehmer 5 so, dass der zweite Mitnehmer 5 in Abhängigkeit der Rotationsfrequenz des ersten Mitnehmers 4 im Mitnahmezustand 10 oder im Freilaufzustand 20 betrieben wird. Die Rotationsfrequenz des ersten Mitnehmers 4 entspricht der Rotationsfrequenz des Antriebsmotors 3. Die Rotationsfrequenz des ersten Mitnehmers 4 entspricht der Rotationsfrequenz des zweiten Mitnehmers 5.

Bei einer ersten Rotationsfrequenz des ersten Mitnehmers 4 befindet sich der zweite Mitnehmer 5 im Mitnahmezustand 10. Bei einer zweiten Rotationsfrequenz des ersten Mitnehmers 4 befindet sich der zweite Mitnehmer 5 im Freilaufzustand 20. Die erste Rotationsfrequenz ist kleiner als die zweite Rotationsfrequenz. Zwischen der ersten Rotationsfrequenz und der zweiten Rotationsfrequenz liegt eine Grenzrotationsfrequenz. Die Grenzrotationsfrequenz ist größer als die erste Rotationsfrequenz und kleiner als die zweite Rotationsfrequenz. Die Steuereinheit 6 steuert den zweiten Mitnehmer 5 so, dass der zweite Mitnehmer 5 beim Überschreiten der Grenzrotationsfrequenz in Richtung von der ersten Rotationsfrequenz zur zweiten Rotationsfrequenz vom Mitnahmezustand 10 in den Freilaufzustand 20 überführt wird.

Um die auf einer Auflagefläche 27 (Fig. 14) liegende flache Teigscheibe 2 zu rotieren, greifen zunächst der erste Mitnehmer 4 der Rotationsvorrichtung 1 und der im Mitnahmezustand 10 (Fig. 26) befindliche zweite Mitnehmer 5 in die Teigscheibe 2 ein. Zunächst befinden sich der erste Mitnehmer 4 und der im Mitnahmezustand 10 befindliche zweite Mitnehmer 5 in einer Ruhelage. In der Ruhelage rotieren der erste Mitnehmer 4 und der zweite Mitnehmer 5 nicht. Die Rotationsfrequenz des ersten Mitnehmers 4 und des zweiten Mitnehmers 5 wird dann ausgehend von der Ruhelage des ersten Mitnehmers 4 und des zweiten Mitnehmers 5 kontinuierlich gesteigert. Bei dieser Erhöhung der Rotationsfrequenz wird die erste Rotationsfrequenz passiert. Unterhalb der Grenzrotationsfrequenz befindet sich der zweite Mitnehmer 5 im Mitnahmezustand 10. Nach dem Passieren der Grenzrotationsfrequenz wird der zweite Mitnehmer 5 vom Mitnahmezustand 10 in den Freilaufzustand 20 überführt. Der zweite Mitnehmer 5 greift dann nicht mehr in die Teigscheibe 2 ein. Die Rotation der Teigscheibe 2 wird dann ausschließlich von dem ersten Mitnehmer 4 bewirkt. Oberhalb der Grenzrotationsfrequenz befindet sich der zweite Mitnehmer 5 im Freilaufzustand 20. Die Steuereinheit 6 und die Rotationsvorrichtung 1 sind so ausgelegt, dass der erste Mitnehmer 4 und der zweite Mitnehmer 5 zu einem ersten Zeitpunkt, nämlich zu Beginn der Übertragung des Drehmoments auf die Teigscheibe 2 mit der ersten Rotationsfrequenz rotieren, dass zu dem ersten Zeitpunkt sowohl der erste Mitnehmer 4 als auch der zweite Mitnehmer 5 zur Übertragung des Drehmoments beitragen, dass zu einem zweiten Zeitpunkt, der nach dem ersten Zeitpunkt liegt, zumindest der erste Mitnehmer 4 mit der zweiten Rotationsfrequenz rotiert und dass zu dem zweiten Zeitpunkt der zweite Mitnehmer 5 an der Übertragung des Drehmoments unbeteiligt ist.

Das industrielle Fertigungsverfahren zur Rotation der flachen Teigscheibe 2 gemäß des zweiten erfinderischen Gedankens umfasst folgende Schritte: Zur Rotation der Teigscheibe 2 um die Rotationsachse 50 wird zunächst Drehmoment sowohl mit dem ersten Mitnehmer 4 als auch mit dem zweiten Mitnehmer 5 auf die Teigscheibe 2 übertragen. Hierbei ist der zweite Mitnehmer 5 weiter entfernt von der Rotationsachse 50 als der erste Mitnehmer 4. Anschließend wird das Drehmoment so auf die Teigscheibe 2 übertragen, dass der zweite Mitnehmer 5 an der Übertragung des Drehmoments unbeteiligt ist.

Unterhalb der Grenzrotationsfrequenz kann zwischen der Teigscheibe 2 und der Auflagefläche 27 noch eine Haftreibungskraft wirken. Nach dem Überschreiten der Grenzrotationsfrequenz in Richtung von der ersten Rotationsfrequenz zur zweiten Rotationsfrequenz wirken keine Haftreibungskräfte mehr zwischen der Teigscheibe 2 und der Auflagefläche 27. In diesem Frequenzbereich oberhalb der Grenzrotationsfrequenz können lediglich noch Gleitreibungskräfte zwischen der Teigscheibe 2 und der Auflagefläche 27 wirken. Die Gleitreibungskraft zwischen der Teigscheibe 2 und der Auflagefläche 27 ist geringer als die Haftreibungskraft zwischen der Teigscheibe 2 und der Auflagefläche 27. Oberhalb der Grenzrotationsfrequenz ist zur Aufrechterhaltung der Rotationsbewegung der Teigscheibe 2 lediglich noch der erste Mitnehmer 4 erforderlich. Die Teigmasse der Teigscheibe 2 kann sich dann ungehindert durch den zweiten Mitnehmer 5 unter dem Einfluss der Fliehkraft verteilen. Die Teigscheibe 2 rotiert für eine bestimmte vorgegebene Zeit mit einer Rotationsfrequenz oberhalb der Grenzrotationsfrequenz. Das gewünschte Dickenprofil der Teigscheibe 2 stellt sich ein.

Nach Erreichen des gewünschten Dickenprofils und der gewünschten Ausdehnung und der gewünschten Abrundung der Teigscheibe 2 soll der Rotationsvorgang der Teigscheibe 2 beendet werden. Damit dies kontrolliert geschieht, wird die Rotationsfrequenz nach Ablauf der vorgegebenen Zeit kontinuierlich langsam abgesenkt. Die Rotationsfrequenz wird startend bei der zweiten Rotationsfrequenz verringert. Die Steuereinheit 6 steuert den zweiten Mitnehmer 5 so, dass der zweite Mitnehmer 5 beim Überschreiten der Grenzrotationsfrequenz des ersten Mitnehmers 4 in Richtung von der zweiten Rotationsfrequenz zu der ersten Rotationsfrequenz vom Freilaufzustand 20 in den Mitnahmezustand 10 überführt wird. Der zweite Mitnehmer 5 greift dann wieder in die Teigscheibe 2 ein. Dies ist nicht zwingend erforderlich, jedoch vorteilhaft. Bei Rotation der Teigscheibe 2 bei einer Rotationsfrequenz unterhalb der Grenzrotationsfrequenz kann die Haftreibungskraft zwischen der Teigscheibe 2 und der Auflagefläche 27 wieder wirken. Aufgrund des Eingriffs des zweiten Mitnehmers 5 in die Teigscheibe 2 ist das Drehmoment der Teigscheibe 2 größer als das Haftreibungsmoment zwischen der Teigscheibe 2 und der Auflagefläche 27. Dadurch ist verhindert, dass die Teigscheibe 2 bei Rotation mit einer Rotationsfrequenz unterhalb der Grenzrotationsfrequenz mit radial außen liegenden Bereichen an der Auflagefläche 27 hängen bleibt und es so zu Verwerfungen oder Rissen in der Teigscheibe 2 kommt. Beim industriellen Fertigungsverfahren gemäß des zweiten Ausführungsbeispiels wird bei Beendigung der Rotation der Teigscheibe 2 um die Rotationsachse 50 das Drehmoment der Teigscheibe 2 sowohl mit dem ersten Mitnehmer 4 als auch mit dem zweiten Mitnehmer 5 verringert. Die Rotationsfrequenz des ersten Mitnehmers 4 wird weiter kontinuierlich verringert. Die erste Rotationsfrequenz wird passiert, und schließlich kommt der erste Mitnehmer 4 zum Stillstand. Er befindet sich nun wieder in seiner Ruhelage. Die Teigscheibe 2 rotiert nicht mehr. Die Teigscheibe 2 liegt nun wieder auf der Auflagefläche 27 auf. Der erste Mitnehmer 4 und der zweite Mitnehmer 5 werden mittels der in den Fig. 19, 21 und 22 dargestellten Hubvorrichtung 12 aus der Teigscheibe 2 entfernt. Die Teigscheibe 2 kann nun weiter verarbeitet werden.

Wie aus den Fig. 13 bis 18 ersichtlich, ist die Rotationsvorrichtung 1 in den Fließbandablauf der Fertigungsvorrichtung 30 implementiert. Die Fertigungsvorrichtung 1 weist einen Antrieb 34 zur Bewegung eines oberen Trums des Transportbands 31 in Förderrichtung 47 auf (Fig. 18).

Die Kontrollvorrichtung 33 steuert die Fertigungsvorrichtung 30 im Ausführungsbeispiel nach den Figuren 13 bis 26 so und die Fertigungsvorrichtung 30 ist so ausgelegt, dass die Teigscheibe 2 schrittweise in Förderrichtung 47 bewegt wird. Hierzu wird das Transportband 31 schrittweise vom Antrieb 34 angetrieben. Wenn die Teigscheibe 2 mittels des Transportbands 31 unter die Rotationsvorrichtung 1 bewegt und von der Rotationsvorrichtung 1 zur Rotation aufgenommen wird, steht das Transportband 31 während der Rotation der Teigscheibe 2 still.

Es kann aber auch vorgesehen sein, dass das Transportband 31 auch im Ausführungsbeispiel nach den Figuren 13 bis 26 analog zum Ausführungsbeispiel nach den Figuren 1 bis 12 kontinuierlich bewegt wird.

Um die Teigscheibe 2 zu rotieren, wird am Anfang des Rotationsvorgangs Drehmoment sowohl mit dem ersten Mitnehmer 4 als auch mit dem zweiten Mitnehmer 5 auf die Teigscheibe 2 übertragen. Die Kontrollvorrichtung 33 steuert die Fertigungsvorrichtung 30 so und die Fertigungsvorrichtung 30 ist so ausgelegt, dass nach Überschreiten der Grenzrotationsfrequenz der zweite Mitnehmer 5 an der Übertragung des Drehmoments auf die Teigscheibe 2 unbeteiligt ist. Am Anfang des Rotationsvorgangs befindet sich der zweite Mitnehmer 5 im Mitnahmezustand 10. Nach Überschreiten der Grenzrotationsfrequenz befindet sich der zweite Mitnehmer 5 im Freilaufzustand 20. Am Ende des Rotationsvorgangs befindet sich der zweite Mitnehmer 5 wieder im Mitnahmezustand 10. Am Anfang des Rotationsvorgangs wird der erste Mitnehmer 4 mittels der Hubvorrichtung 12 so an das Transportband 31 angenähert, dass der erste Mitnehmer 4 in die Teigscheibe 2 eingreift. Am Ende des Rotationsvorgangs wird der erste Mitnehmer 4 mittels der Hubvorrichtung 12 so von dem Transportband 31 entfernt, dass der erste Mitnehmer 4 nicht in die Teigscheibe 2 eingreift.

Nach der Beendigung des Rotationsvorgangs der Teigscheibe 2 liegt die Teigscheibe 2 wieder auf dem Transportband 31 der Fertigungsvorrichtung 30. Der Stillstand des Transportbands 31 wird beendet. Die Teigscheibe 2 wird in Förderrichtung 47 weiter befördert. Nach dem Rotationsvorgang der Teigscheibe 2 kann die Teigscheibe 2 in der Fertigungsvorrichtung 30 beispielsweise belegt und anschließend gebacken werden.

## Patentansprüche

1. Rotationsvorrichtung zur Rotation einer flachen Teigscheibe, umfassend
- eine Auflagefläche (27) für die Teigscheibe (2),
- einen Antriebsmotor (3),
- einen oberhalb der Auflagefläche (27) angeordneten ersten Mitnehmer (4), der mittels des Antriebsmotors (3) rotierend um eine Rotationsachse (50) antreibbar ist, wobei der erste Mitnehmer (4) dazu ausgelegt ist, ein Drehmoment auf die flache Teigscheibe (2) zu übertragen,
**dadurch gekennzeichnet, dass** die Auflagefläche (27) bezüglich der Rotationsachse (50) unrotierbar ist, dass der erste Mitnehmer (4) Eingreifelemente (28) zum Eingriff in die flache Teigscheibe (2) aufweist, dass der erste Mitnehmer (4) dazu ausgelegt ist, mit den Eingreifelementen (28) in die flache Teigscheibe (2) einzugreifen und mittels der in die flache Teigscheibe (2) eingreifenden Eingreifelemente (28) Drehmoment auf die flache Teigscheibe (2) zu übertragen, so dass die flache Teigscheibe (2) um die Rotationsachse (50) in Relation zu der unrotierten Auflagefläche (27) rotiert, dass die Eingreifelemente (28) so gestaltet sind, dass sie während des Eingriffs in die flache Teigscheibe eine Ausdehnung der flachen Teigscheibe (2) aufgrund der auf sie während der Rotation wirkenden Zentrifugalkraft in Radialrichtung (49) radial zur Rotationsachse (50) zulassen, dass der erste Mitnehmer (4) von dem Antriebsmotor (3) so angetrieben ist, dass die Eingreifelemente (28) in einer Drehrichtung (48) um die Rotationsachse (50) umlaufen, dass der erste Mitnehmer (4) einen Grundkörper (29) aufweist, und dass die Eingreifelemente (28) gegenüber dem Grundkörper (29) in Richtung auf die Auflagefläche (27) vorstehen, dass die Eingreifelemente (28) in Drehrichtung (48) vorne liegend eine Eingreiffläche (37) aufweisen, mittels derer Drehmoment vom ersten Mitnehmer (4) auf die flache Teigscheibe (2) übertragbar ist, und dass die Eingreiffläche (37) ausgehend von dem Grundkörper (29) des ersten Mitnehmers (4) bezüglich der Richtung der Rotationsachse (50) hin zu der Auflagefläche (27) nach vorne in Drehrichtung (48) geneigt verläuft.

2. Rotationsvorrichtung nach Anspruch 1,
**dadurch gekennzeichnet, dass** die Eingreifelemente (28) so gestaltet sind, dass sie bezüglich der Richtung der Rotationsachse (50) mit einem Hinterschnitt in die flache Teigscheibe (2) eingreifen.

3. Rotationsvorrichtung nach Anspruch 1 oder 2,
**dadurch gekennzeichnet, dass** bezüglich der Drehrichtung (48) zwischen den Eingreifelementen (28) Kanäle (32) ausgebildet sind, die sich von einem auf Seiten der Rotationsachse (50) liegenden Zentrum (35) des ersten Mitnehmers (4) hin zu einer radial außenliegenden Außenseite (36) des ersten Mitnehmers (4) erstrecken.

4. Rotationsvorrichtung nach Anspruch 3,
**dadurch gekennzeichnet, dass** sich die Kanäle (32) in Radialrichtung (49) radial zur Rotationsachse (50) erstrecken.

5. Rotationsvorrichtung nach einem der Ansprüche 1 bis 4,
**dadurch gekennzeichnet, dass** bezüglich Richtung der Rotationsachse (50) zwischen dem Grundkörper (29) und den Eingreifelementen (28) je ein Hohlraum (38) ausgebildet ist.

6. Rotationsvorrichtung nach Anspruch 5,
**dadurch gekennzeichnet, dass** der Hohlraum (38) in Drehrichtung (49) nach vorne offen ist.

7. Rotationsvorrichtung nach Anspruch 5 oder 6,
**dadurch gekennzeichnet, dass** der Hohlraum (38) in Radialrichtung (49) radial von der Rotationsachse (50) weg durch den ersten Mitnehmer (4) unbegrenzt ist.

8. Rotationsvorrichtung nach einem der Ansprüche 1 bis 7,
**dadurch gekennzeichnet, dass** mindestens zwei, insbesondere mindestens drei, insbesondere mindestens vier, insbesondere mindestens fünf Eingreifelemente (28) vorgesehen sind.

9. Fertigungsvorrichtung zur industriellen Fertigung eines flachen Backwerks umfassend ein Transportband (31) und eine Rotationsvorrichtung (1) nach einem der Ansprüche 1 bis 8,
**dadurch gekennzeichnet, dass** das Transportband (31) die Auflagefläche (27) der Rotationsvorrichtung (1) ist.

10. Industrielles Fertigungsverfahren zur Rotation einer flachen Teigscheibe (2) mit zwei abgeflachten Seiten auf einer unrotierten Auflagefläche (27), umfassend folgende Schritte:
- zur Rotation der Teigscheibe (2) um eine Rotationsachse (50), die quer, insbesondere senkrecht zu den abgeflachten Seiten (11, 12) der Teigscheibe (2) verläuft, wird mittels eines ersten Mitnehmers (4) von oben in die Teigscheibe (2) eingegriffen,
- anschließend wird die Rotationsfrequenz der Teigscheibe ausgehend vom unrotierten Zustand so erhöht, dass die Haftreibung zwischen der Teigscheibe und der Auflagefläche überwunden wird ohne dass es zu einer Verdrillung der Teigscheibe (2) kommt.

## Claims

1. Rotary device for rotating a flat dough disc, comprising:
- a bearing face (27) for the dough disc (2);
- a drive motor (3);
- a first driver (4) which is disposed above the bearing face (27) and is able to be driven so as to rotate about a rotation axis (50) by means of the drive motor (3), wherein the first driver (4) is conceived to transmit a torque to the flat dough disc (2),
**characterized in that** the bearing face (27) is non-rotatable relative to the rotation axis (50); **in that** the first driver (4) has engagement elements (28) for engaging in the flat dough disc (2); **in that** the first driver (4) by way of the engagement elements (28) is conceived to engage in the flat dough disc (2) and by means of the engagement elements (28) engaging in the flat dough disc (2) to transmit torque to the flat dough disc (2) in such a way that the flat dough disc (2) rotates about the rotation axis (50) relative to the non-rotated bearing face (27); **in that** the engagement elements (28) are designed in such a way that, while engaging in the flat dough disc, they permit an expansion of the flat dough disc (2) in the radial direction (49) radial in relation to the rotation axis (50) due to the centrifugal force acting on said flat dough disc (2) during rotation; **in that** the first driver (4) is driven by the drive motor (3) in such a way that the engagement elements (28) revolve in a rotation direction (48) about the rotation axis (50); **in that** the first driver (4) has a main body (29); and **in that** the engagement elements (28) project from the main body (29) in the direction towards the bearing face (27); **in that** the engagement elements (28) have an engagement face (37) which lies at the front in the rotation direction (48) and by means of which torque is able to be transmitted from the first driver (4) to the flat dough disc (2); and **in that** the engagement face (37), proceeding from the main body (29) of the first driver (4), in terms of the direction of the rotation axis (50) runs so as to be inclined towards the bearing face (27), towards the front in the rotation direction (48).

2. Rotary device according to Claim 1, **characterized in that** the engagement elements (28) are designed in such a way that, in terms of the direction of the rotation axis (50), they engage in the flat dough disc (2) by way of an undercut.

3. Rotary device according to Claim 1 or 2, **characterized in that** channels (32) which extend from a centre (35) of the first driver (4) that lies on the rotation axis (50) to a radially outer external side (36) of the first driver (4) are formed between the engagement elements (28) in terms of the rotation direction (48).

4. Rotary device according to Claim 3, **characterized in that** the channels (32) extend in the radial direction (49) radial in relation to the rotation axis (50).

5. Rotary device according to one of Claims 1 to 4, **characterized in that** one cavity (38) is in each case formed between the main body (29) and the engagement elements (28) in terms of the direction of the rotation axis (50).

6. Rotary device according to Claim 5, **characterized in that** the cavity (38) is open towards the front in the rotation direction (49).

7. Rotary device according to Claim 5 or 6, **characterized in that** the cavity (38) in the radial direction (49) radially away from the rotation axis (50) is not delimited by the first driver (4).

8. Rotary device according to one of Claims 1 to 7, **characterized in that** at least two, in particular at least three, in particular at least four, in particular at least five, engagement elements (28) are provided.

9. Production device for the industrial production of a flat bakery item, comprising a transport belt (31) and a rotary device (1) according to one of Claims 1 to 8,
**characterized in that** the transport belt (31) is the bearing face (27) of the rotary device (1).

10. Industrial production method for rotating a flat dough disc (2) having two oblate sides on a non-rotated bearing face (27), comprising the following steps:
- engaging from above in the dough disc (2) by means of a first driver (4) so as to rotate the dough disc (2) about a rotation axis (50) which runs transversely, in particular perpendicularly, in relation to the oblate sides (11, 12) of the dough disc (2);
- subsequently increasing the rotation frequency of the dough disc, proceeding from the non-rotated state, in such a way that the static friction between the dough disc and the bearing face is overcome without the dough disc (2) being twisted.

## Revendications

1. Dispositif rotatif pour faire tourner un disque de pâte plat, comprenant
- une surface d'appui (27) pour le disque de pâte (2),
- un moteur d'entraînement (3),
- un premier entraîneur (4) agencé au-dessus de la surface d'appui (27), qui peut être entraîné en rotation autour d'un axe de rotation (50) au moyen du moteur d'entraînement (3), le premier entraîneur (4) étant conçu pour transmettre un couple au disque de pâte plat (2),
**caractérisé en ce que** la surface d'appui (27) ne peut pas tourner par rapport à l'axe de rotation (50), **en ce que** le premier entraîneur (4) présente des éléments d'engagement (28) pour s'engager dans le disque de pâte plat (2), **en ce que** le premier entraîneur (4) est conçu pour s'engager avec les éléments d'engagement (28) dans le disque de pâte plat (2) et pour transmettre un couple au disque de pâte plat (2) au moyen des éléments d'engagement (28) s'engageant dans le disque de pâte plat (2), de telle sorte que le disque de pâte plat (2) tourne autour de l'axe de rotation (50) par rapport à la surface d'appui non rotative (27), **en ce que** les éléments d'engagement (28) sont conçus de telle sorte que, pendant l'engagement dans le disque de pâte plat, ils permettent une extension du disque de pâte plat (2) en raison de la force centrifuge agissant sur lui pendant la rotation dans la direction radiale (49) radialement par rapport à l'axe de rotation (50), **en ce que** le premier entraîneur (4) est entraîné par le moteur d'entraînement (3) de telle sorte que les éléments d'engagement (28) tournent dans une direction de rotation (48) autour de l'axe de rotation (50), **en ce que** le premier entraîneur (4) présente un corps de base (29), et **en ce que** les éléments d'engagement (28) font saillie par rapport au corps de base (29) en direction de la surface d'appui (27), **en ce que** les éléments d'engagement (28) présentent une surface d'engagement (37) située à l'avant dans la direction de rotation (48), au moyen de laquelle le couple peut être transmis du premier entraîneur (4) au disque de pâte plat (2), et **en ce que** la surface d'engagement (37) est inclinée vers l'avant dans la direction de rotation (48) par rapport à la direction de l'axe de rotation (50) vers la surface d'appui (27) en partant du corps de base (29) du premier entraîneur (4).

2. Dispositif rotatif selon la revendication 1,
**caractérisé en ce que** les éléments d'engagement (28) sont conçus de telle sorte qu'ils s'engagent avec une contre-dépouille dans le disque de pâte plat (2) par rapport à la direction de l'axe de rotation (50).

3. Dispositif rotatif selon la revendication 1 ou 2,
**caractérisé en ce que** des canaux (32) sont réalisés entre les éléments d'engagement (28) par rapport à la direction de rotation (48), lesquels s'étendent depuis un centre (35) du premier entraîneur (4) situé du côté de l'axe de rotation (50) jusqu'à un côté extérieur (36) du premier entraîneur (4) situé radialement à l'extérieur.

4. Dispositif rotatif selon la revendication 3,
**caractérisé en ce que** les canaux (32) s'étendent dans la direction radiale (49), radialement par rapport à l'axe de rotation (50).

5. Dispositif rotatif selon l'une quelconque des revendications 1 à 4,
**caractérisé en ce que**, par rapport à la direction de l'axe de rotation (50), une cavité (38) est réalisée entre le corps de base (29) et les éléments d'engagement (28).

6. Dispositif rotatif selon la revendication 5,
**caractérisé en ce que** la cavité (38) est ouverte vers l'avant dans la direction de rotation (49).

7. Dispositif rotatif selon la revendication 5 ou 6,
**caractérisé en ce que** la cavité (38) est illimitée dans la direction radiale (49), radialement à partir de l'axe de rotation (50), par le premier entraîneur (4).

8. Dispositif rotatif selon l'une quelconque des revendications 1 à 7,
**caractérisé en ce qu'**il est prévu au moins deux, notamment au moins trois, notamment au moins quatre, notamment au moins cinq éléments d'engagement (28).

9. Dispositif de fabrication pour la fabrication industrielle d'un produit de boulangerie plat, comprenant une bande transporteuse (31) et un dispositif rotatif (1) selon l'une quelconque des revendications 1 à 8,
**caractérisé en ce que** la bande transporteuse (31) est la surface d'appui (27) du dispositif rotatif (1).

10. Procédé de fabrication industrielle pour la rotation d'un disque de pâte plat (2) à deux côtés aplatis sur une surface d'appui non rotative (27), comprenant les étapes suivantes :
- pour faire tourner le disque de pâte (2) autour d'un axe de rotation (50) qui s'étend transversalement, notamment perpendiculairement aux côtés aplatis (11, 12) du disque de pâte (2), on s'engage par le haut dans le disque de pâte (2) au moyen d'un premier entraîneur (4),
- ensuite, on augmente la fréquence de rotation du disque de pâte à partir de l'état non rotatif de telle sorte que le frottement d'adhérence entre le disque de pâte et la surface d'appui est surmonté sans qu'il se produise une torsion du disque de pâte (2).
